# EUROPEAN PATENT APPLICATION

(11) **EP 4 685 904 A1**
(43) Date of publication of application: **28.01.2026**
(21) Application number: 24781079.9
(22) Date of filing: 18.03.2024
(51) Int. Cl.: H01M 10/0562, H01M 4/13, H01M 4/62, H01M 10/052, H01M 4/38, H01M 4/48, H01M 4/136

(54) **ALL-SOLID-STATE SECONDARY BATTERY**

(30) Priority: 26.03.2023 KR 20230039368; 03.05.2023 KR 20230057764
(71) Applicant: Samsung SDI Co., Ltd., Yongin-si, Gyeongsangnam-do 17084 (KR)
(72) Inventor: SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); PARK, Tae Hyun, Yongin-Si Gyeonggi-do 17084 (KR); LEE, Ji Eun, Yongin-Si Gyeonggi-do 17084 (KR)
(74) Representative: Meissner Bolte Partnerschaft mbB
(86) International application number: PCT/KR2024/003351
(87) International publication number: WO 2024/205088

(57) **Abstract**

This all-solid state secondary battery comprises a positive electrode layer, and a solid electrolyte layer disposed between the positive electrode layer and the negative electrode layer, wherein: the positive electrode layer includes a positive electrode current collector and a positive electrode active material layer disposed on at least one surface of the positive electrode current collector, at least one of the positive electrode active material layer and the solid electrolyte layer comprises a first two-dimensional sulfide-based solid electrolyte; the negative electrode layer includes a negative electrode current collector and a first negative electrode active material layer disposed on at least one surface of the negative electrode current collector; and the initial charge capacity (B) of the first negative electrode active material layer is less than about 50% of the initial charge capacity (A) of the positive electrode active material layer.

## Description

### Technical Field

Embodiments of the present disclosure described herein are related to an all-solid secondary battery.

### Background Art

Recently, batteries that provide increased energy density and safety have been actively developed and/or researched. For example, lithium batteries are utilized in information devices, communication devices, vehicles, and/or the like. Vehicles are related to users' wellbeing, and thus the safety thereof is also important.

Lithium batteries including liquid electrolytes include flammable organic solvents. Lithium batteries including liquid electrolytes have a high risk of overheating and fire in the event of a short circuit.

Solid electrolytes have a reduced possibility of overheating and fire in the event of a short circuit as compared with liquid electrolytes. Lithium batteries including solid electrolytes may provide improved safety as compared with lithium batteries including liquid electrolytes.

### Disclosure of Invention

### Technical Problem

A lithium battery may include a cathode active material layer, and the cathode active material layer may include a conductive material to improve charge/discharge characteristics. The conductive material may be, for example, a carbon-based conductive material. The carbon-based conductive material may have high electronic (e.g., electron) conductivity but may have low ionic (e.g., ion) conductivity. A solid electrolyte may be utilized to improve the ionic conductivity of the cathode active material layer. A solid electrolyte according to the related art may have, for example, a particle form having an aspect ratio of less than about 2. It may be difficult for solid electrolyte particles of the related art having the aspect ratio of less than about 2 to form a long-distance ion conduction path. In a lithium battery including solid electrolyte particles of the related art having the aspect ratio of less than about 2, there may be a high possibility that an ion conduction path is disconnected during charging or discharging of the lithium battery. For example, a lithium battery may include a sulfide-based cathode active material, and the sulfide-based cathode active material may undergo a significant change in volume during charging or discharging. During the charging or discharging of the lithium battery, it may be difficult for solid electrolyte particles of the related art having the aspect ratio of less than about 2 to suppress or reduce the disconnection of an ion conduction path and an increase in internal resistance due to a change in volume of the sulfide-based cathode active material. In some embodiments, there is a need or desire for a method capable of, during charging or discharging of a lithium battery, suppressing the disconnection of an ion conduction path of a cathode active material layer and suppressing the increase in internal resistance of the lithium battery due to a change in volume of a cathode active material.

A lithium battery including a solid electrolyte may have relatively increased interfacial resistance and reduced ionic conductivity as compared with a lithium battery including a liquid electrolyte. In some embodiments, a lithium battery including a solid electrolyte may have relatively low high-rate characteristics and output characteristics as compared with a lithium battery including a liquid electrolyte. In other embodiments, there is a need or desire for a method of increasing the high-rate characteristics and output characteristics of a lithium battery including a solid electrolyte by reducing interfacial resistance and increasing ionic conductivity.

A lithium battery may include a solid electrolyte layer, and the solid electrolyte layer may include, for example, solid electrolyte particles having an aspect ratio of less than about 2. The solid electrolyte layer may include the solid electrolyte particles having an aspect ratio of less than about 2, and thus a length of an interfacial path between the solid electrolyte particles formed in a thickness direction of the solid electrolyte layer may be similar to a thickness of the solid electrolyte layer. In some embodiments, a path through which lithium dendrites precipitated during a charging/discharging process of the lithium battery pass through the solid electrolyte layer may be shortened, and thus a possibility of a short circuit in the lithium battery may increase due to the lithium dendrites. In some embodiments, there is a need or desire for a method of more effectively suppressing the growth of lithium dendrites and a short circuit of a lithium battery.

Aspects according to one or more embodiments are directed toa novel all-solid secondary battery.

### Solution to Problem

According to one or more embodiments, an all-solid secondary battery includes
a cathode layer, an anode layer, and a solid electrolyte layer disposed between the cathode layer and the anode layer, wherein
the cathode layer includes a cathode current collector and a cathode active material layer disposed on at least one surface (e.g., one or two (e.g., opposite) surfaces) of the cathode current collector,
at least one of the cathode active material layer or the solid electrolyte layer includes a first two-dimensional sulfide-based solid electrolyte, and
the anode layer includes an anode current collector and a first anode active material layer disposed on at least one surface (e.g., a or one surface) of the anode current collector, wherein
an initial charge capacity (B) of the first anode active material layer is less than about 50 % of an initial charge capacity (A) of the cathode active material layer.

According to one or more embodiments, an all-solid secondary battery includes
a cathode layer, an anode layer, and a solid electrolyte layer disposed between the cathode layer and the anode layer, wherein
the cathode layer includes a cathode current collector and a cathode active material layer disposed on at least one surface (e.g., one or two (e.g., opposite) surfaces) of the cathode current collector,
at least one of the cathode active material layer or the solid electrolyte layer includes a first two-dimensional sulfide-based solid electrolyte, and
the anode layer includes an anode current collector and a first anode active material layer disposed on at least one surface (e.g., a or one surface) of the anode current collector.

According to one or more embodiments, an all-solid secondary battery includes
a cathode layer, an anode layer, and a solid electrolyte layer disposed between the cathode layer and the anode layer, wherein
the cathode layer includes a cathode current collector and a cathode active material layer disposed on at least one surface (e.g., one or two (e.g., opposite) surfaces) of the cathode current collector, and
at least one of the cathode active material layer or the solid electrolyte layer includes a first two-dimensional sulfide-based solid electrolyte.

### Advantageous Effects of Invention

According to an aspect, according to an all-solid secondary battery having a novel structure, there may be provided an all-solid secondary battery of which a short circuit is suppressed or reduced and the cycle characteristics are improved.

### Brief Description of Drawings

FIG. 1 is a schematic view of a two-dimensional sulfide-based solid electrolyte according to embodiments.
FIG. 2 is a schematic view of a two-dimensional sulfide-based solid electrolyte having a core/shell structure, according to embodiments.
FIG. 3 is a cross-sectional view of a two-dimensional sulfide-based solid electrolyte having a core/shell structure, according to embodiments.
FIG. 4 is a cross-sectional view of a two-dimensional sulfide-based solid electrolyte having a core/interlayer/shell structure, according to embodiments.
FIGS. 5A-5C are cross-sectional views of a cathode active material layer including a two-dimensional sulfide-based solid electrolyte, according to embodiments.
FIG. 6 is a cross-sectional view of a solid electrolyte layer including a two-dimensional sulfide-based solid electrolyte, according to embodiments.
FIG. 7 is a cross-sectional view of a solid electrolyte layer including an irregular-shaped sulfide-based solid electrolyte, according to embodiments.
FIG. 8 is a schematic view of a solid electrolyte layer including a two-dimensional sulfide-based solid electrolyte, according to embodiments.
FIG. 9 is a schematic view of a solid electrolyte layer including an irregular-shaped sulfide-based solid electrolyte, according to embodiments.
FIG. 10 is a cross-sectional view of an all-solid secondary battery, according to embodiments.
FIG. 11 is a cross-sectional view of a bi-cell all-solid secondary battery, according to embodiments.
FIG. 12 is a cross-sectional view of an all-solid secondary battery, according to embodiments.
FIG. 13 is a cross-sectional view of an all-solid secondary battery, according to embodiments.
FIG. 14 is a cross-sectional view of a bi-cell all-solid secondary battery, according to embodiments.

### Best Mode for Carrying out the Invention

Various implementations are illustrated in the accompanying drawings. The present disclosure may, however, be embodied in different forms and should not be construed as limited to the embodiments set forth herein. Rather, these embodiments are provided so that the present disclosure will be thorough and complete, and will fully convey the scope of the present disclosure to those skilled in the art. Like reference numerals designate like elements.

When it is described that an element is "on" another element, it will be understood that the element may be disposed directly on another element or still another (intervening) element(s) may be interposed therebetween. On the other hand, when it is described that an element is "directly on" another element, still another element(s) are not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. Thus, a first element, component, region, layer, or section described herein may be termed a second element, component, region, layer, or section without departing from the teachings of the present specification.

The term utilized herein is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. "At least one" should not be construed as being limited to the singular. As utilized herein, the term "and/or" includes any and all combinations of one or more of the associated listed items. The terms "includes," "including," "comprises," and/or "comprising," when utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilize or operation in addition to the orientation illustrated in the drawings. For example, when a device in the drawings is turned over, elements described as "below" or "beneath" other elements or features would then be "above" or "over" the other elements or features. In some embodiments, the example term "below" may encompass both (e.g., simultaneously) orientations of above and below. The device may be otherwise oriented (rotated 90 degrees or at other orientations), and the spatially relative terms utilized herein may be interpreted accordingly.

Unless otherwise defined, all terms (including technical and scientific terms) utilized herein have the same meaning as commonly understood by one of ordinary skill in the art to which the present disclosure belongs. For example, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross-sectional views which are schematic diagrams of idealized embodiments. As such, variations from the shapes of the illustrations as a result, for example, of manufacturing techniques and/or tolerances, are to be expected. Thus, the embodiments described herein should not be construed as limited to the particular shapes regions of illustrated herein but may include deviations in shapes that result, for example, from manufacturing. For example, regions illustrated or described as being flat may be typically rough and/or have nonlinear features. Moreover, sharp-drawn angles may be round. In some embodiments, regions illustrated in the drawings are schematic in nature and their shapes are not intended to illustrate the actual shape of a region and are not intended to limit the scope of the claims.

"Group" refers to a group of the periodic table of elements according to the International Union of Pure and Applied Chemistry ("IUPAC") Groups 1-18 group classification system.

As utilized herein, the term "aspect ratio" may be measured, for example, by utilizing scanning electron microscope (SEM), transmission electron microscope (TEM), or atomic force microscope (AFM) images.

As utilized herein, the "shape," "structure," "length," "surface area" and/or "thickness" of the two-dimensional sulfide-based solid electrolyte may be measured, for example, by utilizing scanning electron microscope (SEM), transmission electron microscope (TEM), or atomic force microscope (AFM) images.

As utilized herein, the "thickness" and/or "diameter" of the core and shell of the cathode active material may be measured, for example, by utilizing scanning electron microscope (SEM), transmission electron microscope (TEM), or atomic force microscope (AFM) images.

As utilized herein, the term "particle diameter" refers to an average diameter when particles are spherical and refers to an average major axis length when particles are non-spherical. A particle diameter may be measured by utilizing a particle size analyzer (PSA). A "particle diameter" is, for example, an average particle diameter. An "average particle diameter" refers to, for example, a median particle diameter (D50).

D50 refers to a particle size corresponding to a 50 % cumulative volume if (e.g., when) a particle size distribution measured through a laser diffraction method is calculated from particles having a smaller particle size.

D90 refers to a particle size corresponding to a 90 % cumulative volume if (e.g., when) a particle size distribution measured through a laser diffraction method is calculated from particles having a smaller particle size.

D10 refers to a particle size corresponding to a 10 % cumulative volume if (e.g., when) a particle size distribution measured through a laser diffraction method is calculated from particles having a smaller particle size.

The term "metal" as utilized herein includes all of metals and metalloids such as silicon and germanium in an elemental or ionic state.

The term "alloy" as utilized herein refers to a mixture of two or more metals.

The term "electrode active material" as utilized herein refers to an electrode material that may undergo lithiation and delithiation.

The term "cathode active material" as utilized herein refers to a cathode material that may undergo lithiation and delithiation.

The term "anode active material" as utilized herein refers to an anode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

While specific embodiments have been described, alternatives, modifications, variations, improvements, and substantial equivalents that are or may be presently unforeseen may arise to applicants or others skilled in the art. In some embodiments, the appended claims as filed and as they may be amended are intended to embrace all such alternatives, modifications, variations, improvements, and substantial equivalents.

Hereinafter, all-solid secondary batteries according to example embodiments will be described in more detail.

### [All-solid secondary battery]

An all-solid secondary battery according to embodiments may include a cathode layer, an anode layer, and a solid electrolyte layer disposed between the cathode layer and the anode layer, wherein the cathode layer includes a cathode current collector and a cathode active material layer disposed on at least one surface (e.g., one or two (e.g., opposite) surfaces) of the cathode current collector, at least one of the cathode active material layer or the solid electrolyte layer includes a first two-dimensional (2D) sulfide-based solid electrolyte, and the anode layer includes an anode current collector and a first anode active material layer disposed on at least one surface (e.g., a or one surface) of the anode current collector, wherein an initial charge capacity B of the first anode active material layer is less than about 50 % of an initial charge capacity A of the cathode active material layer.

The all-solid secondary battery may include the cathode active material layer, and the cathode active material layer may include the first 2D sulfide-based solid electrolyte so that a more extended ion conduction path may be secured in the cathode active material layer. In some embodiments, during charging or discharging of the all-solid secondary battery, the disconnection of an ion conduction path due to a change in volume of a cathode active material in the cathode active material layer may be more effectively prevented or reduced. In some embodiments, the initial efficiency, discharge capacity, high-rate characteristics, and/or lifespan characteristics of the all-solid secondary battery may be improved.

The all-solid secondary battery may include the cathode active material layer, and the cathode active material layer may include the first 2D sulfide-based solid electrolyte so that the uniformity of an ion conduction path may be secured in the cathode active material layer. In some embodiments, a pressure required for manufacturing the all-solid secondary battery may be reduced. For example, an all-solid secondary battery having an excellent or suitable ion conduction path may be implemented even at a reduced pressure. In other embodiments, the occurrence of local overvoltage in the cathode active material layer may be effectively prevented or reduced during a charging/discharging process of the all-solid secondary battery.

The all-solid secondary battery may include the cathode active material layer, and the cathode active material layer may include the first 2D sulfide-based solid electrolyte having a reduced specific surface area, thereby increasing moisture stability, reducing a side reaction between a cathode active material and a sulfide-based solid electrolyte, reducing the interfacial resistance of the cathode active material layer, and suppressing a decrease in ionic conductivity. In some embodiments, the high-rate characteristics and output characteristics of the all-solid secondary battery may be improved.

The all-solid secondary battery may include the cathode active material layer, and the cathode active material layer may include the first 2D sulfide-based solid electrolyte, thereby more effectively accommodating a change in volume of a cathode active material during charging or discharging. In the cathode active material layer, a 2D sulfide-based solid electrolyte may be disposed around a cathode active material. During charging or discharging, the 2D sulfide-based solid electrolyte may suitably disperse a change in volume of the cathode active material over the entire area thereof to accommodate the change, thereby more effectively accommodating a change in volume of the cathode active material as compared with a sulfide-based solid electrolyte having a spherical particle form. In some embodiments, disconnection between a cathode active material and a solid electrolyte due to a change in volume of the cathode active material in the cathode active material layer may be suppressed or reduced, and the uniformity of components in the cathode active material layer may be improved. In other embodiments, the cycle characteristics of the all-solid secondary battery may be improved.

The all-solid secondary battery may include the solid electrolyte layer, and the solid electrolyte layer may include the first 2D sulfide-based solid electrolyte so that the growth of lithium dendrites in a thickness direction of the solid electrolyte layer may be more effectively suppressed or reduced. In some embodiments, the occurrence of a short circuit and/or the like due to the growth of lithium dendrites during charging or discharging of the all-solid secondary battery may be more effectively suppressed or reduced. For example, the lifespan characteristics of the all-solid secondary battery may be improved.

The all-solid secondary battery may include the solid electrolyte layer, and the solid electrolyte layer may include the first 2D sulfide-based solid electrolyte having an increased surface area so that, during preparation of the solid electrolyte layer, a possibility that pinholes are formed in a surface of the solid electrolyte layer may be reduced. In some embodiments, the growth of lithium dendrites due to the pinholes may be more effectively suppressed or reduced during charging or discharging of the all-solid secondary battery. For example, the lifespan characteristics of the all-solid secondary battery may be improved.

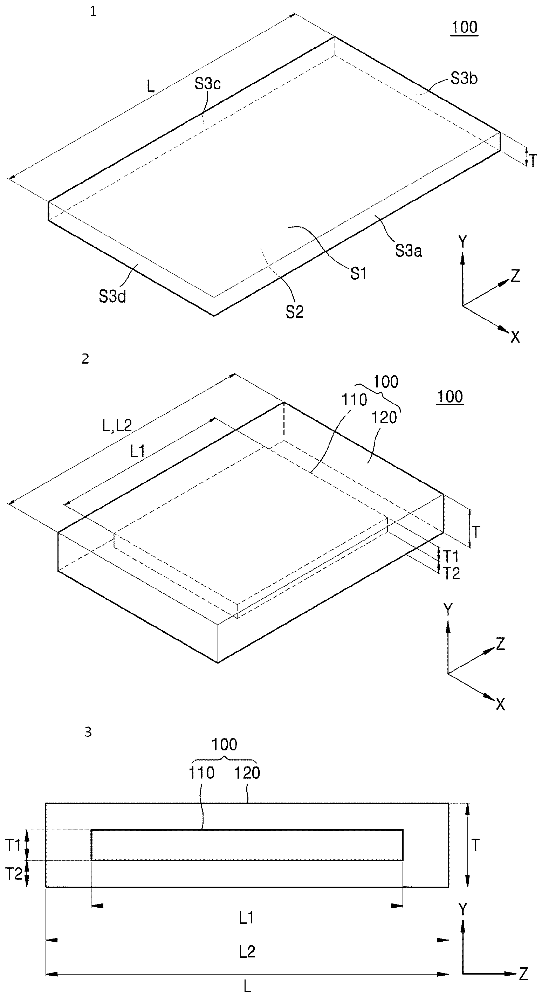

Referring to FIGS. 1 to 13, an all-solid secondary battery 1 may include a cathode layer 10, an anode layer 20, and a solid electrolyte layer 30 disposed between the cathode layer 10 and the anode layer 20. The cathode layer 10 may include a cathode current collector 11 and a cathode active material layer 12 disposed on at least one surface (e.g., one or two (e.g., opposite) surfaces) of the cathode current collector 11. The cathode active material layer 12, the solid electrolyte layer 30, or a combination thereof may include a first 2D sulfide-based solid electrolyte 100. The anode layer 20 may include an anode current collector 21 and a first anode active material layer 22 disposed on at least one surface of the anode current collector 21. An initial charge capacity B of the first anode active material layer 22 may be less than about 50 % of an initial charge capacity A of the cathode active material layer 12.

### [Cathode layer]

### [Cathode layer: Solid electrolyte]

The cathode active material layer 12 may include the first 2D sulfide-based solid electrolyte 100.

Referring to FIGS. 1 to 4, the first 2D sulfide-based solid electrolyte 100 may be defined by a length L and a thickness T. The length L of the first 2D sulfide-based solid electrolyte 100 may correspond to a maximum value among distances between ends (e.g., both or opposite ends) of the first 2D solid electrolyte 100 in a direction perpendicular or normal to a thickness direction (Y-direction) of the first 2D sulfide-based solid electrolyte 100. The thickness T of the first 2D sulfide-based solid electrolyte 100 may correspond to a maximum value among distances between the ends (e.g., the both or opposite ends) of the first 2D solid electrolyte 100 in the thickness direction (Y-direction) of the first 2D sulfide-based solid electrolyte 100. In other embodiments, the first 2D sulfide-based solid electrolyte 100 may include a first (e.g., top) surface S1, a second (e.g., bottom) surface S2 opposite to the first surface S1, and side surfaces S3a, S3b, S3c, and S3d for connecting the first surface S1 and the second surface S2 and may be defined by an area of the first surface S1 or an area of the second surface S2 and a height of the side surfaces of S3a, S3b, S3c, and S3d. The area of the first surface S1 or the area of the second surface S2 may correspond to, for example, the product of a maximum value and a minimum value of distances between ends (e.g., both or opposite ends) of a perimeter of the first surface S1 or a perimeter of the second surface S2. The height of the side surfaces S3a, S3b, S3c, and S3d may correspond to a maximum value of a distance between the first surface S1 and the second surface S2. In other embodiments, the area of the first surface S1 or the second surface S2 may correspond to an integral value of an area read from a plane view image (e.g., in a plan view) of a scanning electron microscope (SEM) in the thickness direction (Y-direction) of the first 2D sulfide-based solid electrolyte 100. The height of the side surfaces S3a, S3b, S3c, and S3d may correspond to a maximum value read from a side view image of a SEM in a longitudinal direction (X-direction or Z-direction) of the first 2D sulfide-based solid electrolyte 100.

An aspect ratio of the length L to the thickness T of the first 2D sulfide-based solid electrolyte 100 may be, for example, about 3 or more, about 4 or more, about 5 or more, about 10 or more, or about 20 or more. The aspect ratio of the length L to the thickness T of the first 2D sulfide-based solid electrolyte 100 may be, for example, in a range of about 3 to about 500, about 3 to about 400, about 4 to about 300, about 5 to about 200, or about 10 to about 200. The aspect ratio of the first 2D sulfide-based solid electrolyte 100 may be in such a range so that an ion conduction path may extend in a lithium battery including the first 2D sulfide-based solid electrolyte 100, a change in volume of a cathode active material may be more effectively accommodated during charging or discharging of the lithium battery, and the ion conduction path in the lithium battery may be maintained despite the change in volume of the cathode active material. In some embodiments, the deterioration of a lithium battery may be suppressed or reduced, and the cycle characteristics of the lithium battery may be improved.

The length L of the first 2D sulfide-based solid electrolyte 100 may be, for example, in a range of about 0.1 µm to about 50 µm, about 0.5 µm to about 50 µm, about 1 µm to about 50 µm, about 1 µm to about 30 µm, about 1 µm to about 20 µm, or about 1 µm to about 10 µm. The thickness T of the first 2D sulfide-based solid electrolyte 100 may be, for example, in a range of about 10 nm to about 30 µm, about 10 nm to about 20 µm, about 10 nm to about 10 µm, about 10 nm to about 5 µm, about 10 nm to about 1 µm, about 10 nm to about 500 nm, about 10 nm to about 300 nm, or about 10 nm to about 100 nm. The length and/or the thickness of the first 2D sulfide-based solid electrolyte 100 may be in such a range so that an ion conduction path may extend in a lithium battery including the first 2D sulfide-based solid electrolyte 100, a change in volume of a cathode active material may be more effectively accommodated during charging or discharging of the lithium battery, and the ion conduction path in the lithium battery may be maintained despite the change in volume of the cathode active material. In some embodiments, the deterioration of a lithium battery may be suppressed or reduced, and the cycle characteristics of the lithium battery may be improved.

The first 2D sulfide-based solid electrolyte 100 may have, for example, a plate structure, a flake structure, a sheet structure or a combination thereof, but one or more embodiments are not necessarily limited to such a form. Any form may be utilized as long as the form may have a 2D structure. The first 2D sulfide-based solid electrolyte 100 may have the plate structure, the flake structure, the sheet structure and/or the like so that an ion conduction path may extend in a lithium battery including the first 2D sulfide-based solid electrolyte 100, a change in volume of a cathode active material may be more effectively accommodated during charging or discharging of the lithium battery, and the ion conduction path in the lithium battery may be maintained despite the change in volume of the cathode active material. In some embodiments, the deterioration of a lithium battery may be suppressed or reduced, and the cycle characteristics of the lithium battery may be improved.

The surface S1 or S2 of the first 2D sulfide-based solid electrolyte 100 may have, for example, an irregular, circular, or polygonal shape. The shape of the surface or S1 or S2 of the first 2D sulfide-based solid electrolyte 100 may be a shape determined, for example, in a plane view in the thickness direction (Y-direction) of the first 2D sulfide-based solid electrolyte 100. The polygonal shape may include, for example, a triangular shape, a rectangular shape, a pentagonal shape, a hexagonal shape, a heptagonal shape, an octagonal shape, a nonagonal shape, or a decagonal shape, but one or more embodiments are not necessarily limited thereto. Any shape may be utilized as long as the shape may be a polygonal shape utilized in the art.

Referring to FIGS. 2 to 4, the first 2D sulfide-based solid electrolyte 100 may have, for example, a core 110/shell 120 structure including a core 110 and a shell 120 disposed on the core 110. The first 2D sulfide-based solid electrolyte 100 may have the core 110/shell 120 structure so that an ion conduction path may extend in a lithium battery including the first 2D sulfide-based solid electrolyte 100, a change in volume of a cathode active material may be more effectively accommodated during charging or discharging of the lithium battery, and the ion conduction path in the lithium battery may be maintained despite the change in volume of the cathode active material. In some embodiments, the deterioration of a lithium battery may be suppressed or reduced, and the cycle characteristics of the lithium battery may be improved. In contrast, a simple mixture of a material of the core 110 and a material of the shell 120 may be likely to cause aggregation of the material of the core 110 and/or the material of the shell 120, resulting in a failure to provide an extended ion conduction path in a lithium battery, resulting in a failure to more effectively accommodate a change in volume of a cathode active material during charging or discharging of the lithium battery, and resulting in the disconnection of the ion conduction path in the lithium battery due to the change in volume of the cathode active material. In some embodiments, the deterioration of a lithium battery may increase, and the cycle characteristics of the lithium battery may deteriorate. For example, the first 2D sulfide-based solid electrolyte 100 having the core 110/shell 120 structure may be a composite in which the core 110 is covered by the shell 120 and thus may be distinguished from the simple mixture of the material of the core 110 and the material of the shell 120.

The core 110 may include, for example, a carbon-based material, a polymer material, a metal-containing inorganic material, a sulfide-based solid electrolyte, an oxide-based solid electrolyte, or a combination thereof. The core 110 may include (e.g., consist of) any material as long as the material may form a 2D structure.

Examples of the carbon-based materials may include artificial graphite, natural graphite, carbon black (CB), acetylene black (AB), furnace black (FB), Ketjen black (KB), graphene, graphene oxide, reduced graphene oxide, carbon nanobelts, carbon nanosheets, and/or the like, but one or more embodiments are not limited thereto. Any material may be utilized as long as the material may be utilized as a carbon-based material with a 2D structure in the art.

The polymer material may include (e.g., be), for example, at least one (e.g., one) selected from among poly(2-vinyl pyridine); polytetrafluoroethylene (PTFE); a tetrafluoroethylene-hexafluoropropylene copolymer; polychlorotrifluoroethylene; a perfluoroalkoxy copolymer; fluorinated cyclic ether; polyethylene oxide diacrylate; polyethylene oxide dimethacrylate; polypropylene oxide diacrylate; polypropylene oxide dimethacrylate; polymethylene oxide diacrylate; polymethylene oxide dimethacrylate; polyalkyldiol diacrylate; polyalkyldiol dimethacrylate; polydivinylbenzene; polyether; polycarbonate; polyamide; polyester; polyvinyl chloride; polyimide (PI); polycarboxylic acid; polysulfonic acid; polyvinyl alcohol; polysulfone; polystyrene; polyethylene (PE); polypropylene (PP); poly(p-phenylene); polyacetylene; poly(p-phenylene vinylene); polyaniline; polypyrrole; polythiophene; poly(2;5-ethylene vinylene); polyarenes; poly(naphthalene-2;6-diyl); polyethylene oxide (PEO); polypropylene oxide; polyvinylidene fluoride (PVDF); a copolymer of vinylidene fluoride and hexafluoropropylene; polyvinyl acetate; poly(vinyl butyral-co-vinyl alcohol-co-vinyl acetate); poly(methyl methacrylate-co-ethyl acrylate); polyacrylonitrile; polyvinyl chloride-co-vinyl acetate; poly(1-vinylpyrrolidone-co-vinyl acetate); polyvinylpyrrolidone; polyacrylate; polymethacrylate; polyurethane; polyvinyl ether; acrylonitrile-butadiene rubber; styrene-butadiene rubber (SBR); acrylonitrile-butadiene-styrene rubber; a sulfonated styrene/ethylene-butylene triblock copolymer; a polymer obtained from at least one acrylate monomer selected from ethoxylated neopentyl glycol diacylate, ethoxylated bisphenol A diacrylate, ethoxylated aliphatic urethane acrylate, an ethoxylated alkylphenol acrylate, and alkyl acrylate; polyvinyl alcohol; an epoxy resin; an acrylic resin; and a combination thereof; but one or more embodiments are not necessarily limited thereto. Any polymer may be utilized as long as the polymer may form a 2D structure in the art. The polymer material may additionally include lithium salt. The polymer material may have a 2D structure.

The metal-containing inorganic material may include, for example, SiO₂, TiO₂, Al₂O₃, AIN, SiC, BaTiO₃, a metal organic framework (MOF), polyhedral oligomeric silsesquioxanes (POSS), Li₂CO₃, Li₃PO₄, Li₃N, Li₃S₄, Li₂O, montmorillonite, or a combination thereof, but one or more embodiments are not limited thereto. Any metal-containing inorganic material may be utilized as long as the metal-containing inorganic material may form a 2D structure in the art. The metal-containing inorganic material may have a 2D structure. The metal-containing inorganic material may have a 2D nanostructure.

The sulfide-based solid electrolyte may include, for example, at least one selected from among Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are each a positive number and Z is one of Ge, Zn, and Ga, Li₂S-GeS₂, Li₂S-SiS₂-Li₃PO₄, Li₂S-SiS₂-LiₚMO_{q}, wherein p and q are each a positive number and M is one of P, Si, Ge, B, Al, Ga, and In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. For example, the sulfide-based solid electrolyte may be prepared by treating a starting material such as Li₂S or P₂S₅ through melt quenching or mechanical milling. For example, after such treating, heat treatment may be performed. The sulfide-based solid electrolyte may be in an amorphous state, a crystalline state, or a mixture state thereof. In some embodiments, the sulfide-based solid electrolyte may include, for example, at least sulfur (S), phosphorus (P), and lithium (Li) as constituent elements among materials of the previously-described sulfide-based solid electrolyte. For example, the sulfide-based solid electrolyte may be a material including Li₂S-P₂S₅. If (e.g., when) a material including Li₂S-P₂S₅ is utilized as a sulfide-based solid electrolyte material, a mixing molar ratio of Li₂S to P₂S₅, for example, Li₂S:P₂S₅ may be in a range of about 50:50 to about 90:10. The sulfide-based solid electrolyte may be an argyrodite-type or kind (e.g., argyrodite) compound including at least one selected from among Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. The sulfide-based solid electrolyte may include at least one selected from among Li₆PS₅Cl, Li₆PS₅Br, and Li₆PS₅I. The sulfide-based solid electrolyte may have a 2D structure.

The oxide-based solid electrolyte may include, for example, Li_{1+x+y}AlₓTi₂₋ₓSi_{y}P_{3-y}O₁₂, wherein 0<x<2 and 0≤y<3, BaTiO₃, Pb(Zr,Ti)O₃ (PZT), Pb₁₋ₓLaₓZr_{1-y}Ti_{y}O₃ (PLZT), wherein 0≤x<1 and 0≤y<1, PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃, wherein 0<x<2 and 0<y<3, LiₓAl_{y}Ti_{z}(PO₄)₃, wherein 0<x<2, 0<y<1, and 0<z<3, Li_{1+x+y}(Al, Ga)ₓ(Ti, Ge)₂₋ₓSi_{y}P_{3-y}O₁₂, wherein 0≤x≤1 and 0≤y≤1, LiₓLa_{y}TiO₃, wherein 0<x<2 and 0<y<3, Li₂O, LiOH, Li₂CO₃, LiAlO₂, Li₂O-Al₂O₃-SiO₂-P₂O₅-TiO₂-GeO₂, Li₃₊ₓLa₃M₂O₁₂, wherein M=Te, Nb, or Zr and 0≤x≤10, or a combination thereof. The oxide-based solid electrolyte may be prepared, for example, through sintering and/or the like. The oxide-based solid electrolyte may be, for example, a garnet-type or kind solid electrode selected from Li₇La₃Zr₂O₁₂ (LLZO) and Li₃₊ₓLa₃Zr₂₋ₐMₐO₁₂ (LLZO doped with M), wherein M=Ga, W, Nb, Ta, or Al, 0<a<2, and 0≤x≤10. The oxide-based solid electrolyte may have a 2D structure.

The core 110 may be utilized as a template for the first 2D sulfide-based solid electrolyte 100. The core 110 may have an excellent or suitable elastic modulus. The elastic modulus of the core 110 may be, for example, 1 MPa or more, 10 MPa or more, or 100 MPa or more. The elastic modulus of the core 110 may be, for example, in a range of about 1 MPa to about 1 GPa, about 10 MPa to about 1 GPa, or about 100 MPa to about 1 GPa. The core 110 may have an elastic modulus in such a range, and thus the mechanical properties of the first 2D sulfide-based solid electrolyte 100 may be further improved.

The shell 120 may include, for example, a sulfide-based solid electrolyte, an oxide-based solid electrolyte, and a coating material. The coating material may be disposed on a portion or the entirety of the core 110. For example, the coating material may provide water resistance, a binding force, and/or the like to the core 110.

The sulfide-based solid electrolyte and the oxide-based solid electrolyte may be selected from solid electrolytes included in the core 110.

The coating material is not limited, and any material may be utilized as long as the material may provide physical properties such as water resistance and a binding force, which are required for a lithium battery, to the first 2D sulfide-based solid electrolyte 100. The coating material may be, for example, a sulfide-based solid electrolyte that does not substantially include crosslinking sulfur and Li₂S. The coating material may be, for example, a composition only including Li₂S and a compound including elements such as P, Si, and Ge of Groups 14 and 15 of the periodic table of elements. In a composition only including Li₂S and P₂S₅, a content (e.g., amount) of Li₂S may be in a range of about 70 % to about 85 %. In a composition only including Li₂S and SiS₂, a content (e.g., amount) of Li₂S may be in a range of about 50 % to about 80 %. In a composition only including Li₂S and GeS₂, a content (e.g., amount) of Li₂S may be in a range of about 50 % to about 80 %. In the previously-described composition, a crosslinked sulfur peak may not be observed in a Raman spectrum, and a Li₂S peak may not be observed in an X-ray diffraction (XRD) spectrum. The sulfide-based solid electrolyte may have such a mole fraction, and thus an amount of generated hydrogen sulfide may decrease. The sulfide-based solid electrolyte may not include (e.g., may exclude) crosslinking sulfur and may not include (e.g., may exclude) Li₂S, and thus an amount of generated hydrogen sulfide may decrease. The sulfide-based solid electrolyte may be sulfide glass.

The coating material may be, for example, a sulfide-based solid electrolyte including crystallized glass which has a composition of yLi₂S-(100-x-y)P₂S₅.xP₂O₅, wherein 0<x<25 and 67<y<80. Such crystallized glass may have an ortho composition to have improved stability against water so that an amount of generated hydrogen sulfide may decrease. The term "ortho" may generally refer to a product with a highest hydration degree among oxo acids obtained by hydrating the same oxide. In a Li₂S-P₂S₅-based sulfide-based solid electrolyte, a crystal composition in which Li₂S is added most to P₂S₅, for example, Li₃PS₄, may correspond to an ortho composition. A mole fraction of Li₂S in 75 Li₂S-25 P₂S₅ may be about 75 %, which has an ortho composition, and thus crosslinking sulfur may not be substantially included. Crosslinking sulfur may be, for example, sulfur that crosslinks two phosphorus atoms in S₃P-S-PS₃ formed by a reaction between Li₂S and P₂S₅. Such crosslinking sulfur may easily react with water and may easily generate hydrogen sulfide. The fact that the sulfide-based solid electrolyte does not substantially include crosslinking sulfur may be confirmed, for example, by measuring a Raman spectroscopic spectrum. In a Raman spectroscopic spectrum, a peak of S₃P-S-PS₃ usually appears at about 402 cm⁻¹. In the Raman spectroscopic spectrum of the sulfide-based solid electrolyte, a peak at about 402 cm⁻¹ may not be detected at all. In the Raman spectroscopic spectrum of the sulfide-based solid electrolyte, a peak (at about 417 cm⁻¹) indicating PS₄³⁻ may be confirmed.

The coating material may include, for example, a binder. The binder may include, for example, polyethylene (PE), polypropylene, polytetrafluoro ethylene (PTFE), polyvinylidene fluoride (PVDF), styrene-butadiene rubber (SBR), a tetrafluoroethylene-perfluoro alkylvinylether copolymer, a vinylidene fluoride-hexafluoropropylene copolymer, a vinylidene fluoride-chlorotrifluoroethylene copolymer, an ethylene-tetrafluoroethylene copolymer, polychlorotrifluoroethylene, a vinylidene fluoride-pentafluoro propylene copolymer, a propylene-tetrafluoroethylene copolymer, an ethylene-chlorotrifluoroethylene copolymer, a vinylidene fluoride-hexafluoropropylene-tetrafluoroethylene copolymer, a vinylidene fluoride-perfluoromethylvinylether-tetrafluoro ethylene copolymer, an ethylene-acrylic copolymer, or a combination thereof, but one or more embodiments are not necessarily limited thereto. Any material may be utilized as long as the material may be utilized as a binder in the art.

At least one of the core 110 or shell 120 may include the sulfide-based solid electrolyte. At least one of the core 110 or the shell 120 may include a sulfide-based solid electrolyte so that excellent or suitable ionic conductivity and mechanical properties may be concurrently (e.g., simultaneously) provided.

The core 110 may include, for example, 2D nanostructures. The core 110 may include the 2D nanostructures, and thus the shell 120 disposed on the core 110 may easily have a 2D structure.

The 2D nanostructures may include, for example, graphene, graphene oxide, reduced graphene oxide, carbon nanobelts, carbon nanosheets, carbon nanoplates, carbon nanoflakes, SiO₂, TiO₂, Al₂O₃, AIN, SiC, BaTiO₃, or a combination thereof, but one or more embodiments are not necessarily limited thereto. Any material may be utilized as long as the material may have a 2D nanostructure and may be utilized in the art.

The first 2D sulfide-based solid electrolyte 100 may include such 2D nanostructures as the core so that an ion conduction path may extend in a lithium battery including the first 2D sulfide-based solid electrolyte 100, a change in volume of a cathode active material may be more effectively accommodated during charging or discharging of the lithium battery, and the ion conduction path in the lithium battery may be maintained despite the change in volume of the cathode active material. In some embodiments, the deterioration of a lithium battery may be further suppressed or reduced, and the cycle characteristics of the lithium battery may be further improved.

Referring to FIGS. 2 to 4, a ratio of a first thickness T1 of the core 110 to a first thickness T2 of the shell 120 may be, for example, in a range of about 1:0.01 to about 1:1,000, about 1:0.1 to about 1:1,000, about 1:0.1 to about 1:100, about 1:0.1 to about 1:10, about 1:0.5 to about 1:5, about 1:1 to about 1:4, about 1:1 to about 1:3, or about 1:1 to about 1:2.

A ratio of a first length L1 of the core 110 to a second length L2 of the shell 120 may be in a range of about 1:1 to about 1:10, about 1:1.01 to about 1:1:5, about 1:1.01 to about 1:2, about 1:1.03 to about 1:1.5, about 1:1.05 to about 1:1.3, about 1:1.05 to about 1:1.1.

In the first 2D sulfide-based solid electrolyte 100, the core 110 and shell 120 may have a thickness ratio and/or length ratio in such a range so that an ion conduction path may extend in a lithium battery including the first 2D sulfide-based solid electrolyte 100, a change in volume of a cathode active material may be more effectively accommodated during charging or discharging of the lithium battery, and the ion conduction path in the lithium battery may be maintained despite the change in volume of the cathode active material. In some embodiments, the deterioration of a lithium battery may be further suppressed or reduced, and the cycle characteristics of the lithium battery may be further improved.

In some embodiments, the core 110 may have a multi-layer structure. The core 110 may have the multi-layer structure, and thus the shape, physical properties, and/or the like of the core 110 may be more variously adjusted. The core 110 may have, for example, a two-layer structure, a three-layer structure, or a four-layer structure. Respective layers of the core 110 having the multi-layer structure may include the same or different materials.

In some embodiments, the shell 120 may have a multi-layer structure. The shell 120 may have the multi-layer structure, and thus the shape, physical properties, and/or the like of the shell core 120 may be more variously adjusted. The shell 120 may have, for example, a two-layer structure, a three-layer structure, or a four-layer structure. Respective layers of the shell 120 having the multi-layer structure may include the same or different materials.

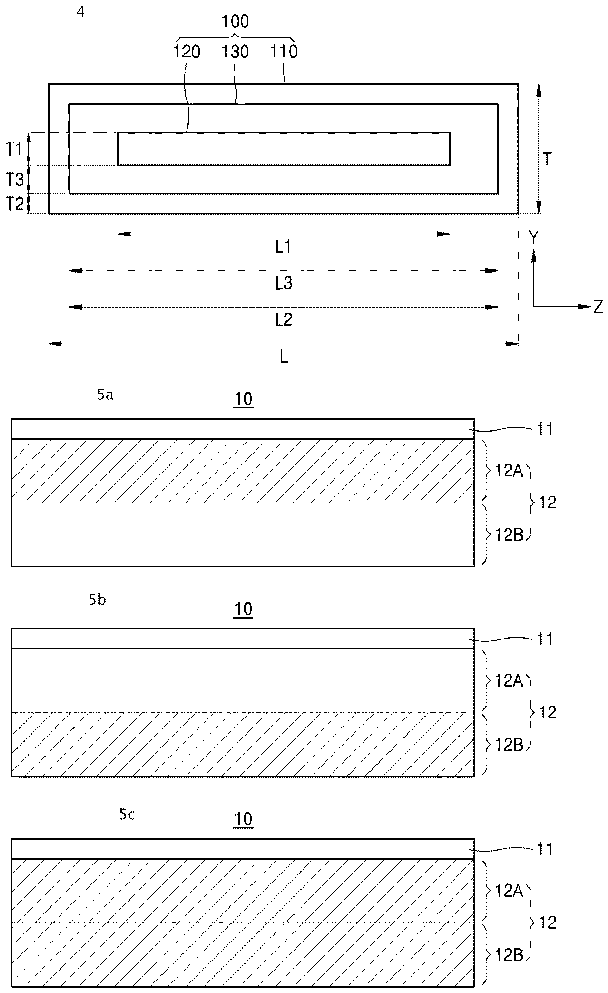

Referring to FIG. 4, an interlayer 130 may be further included between the core 110 and the shell 120. The first 2D sulfide-based solid electrolyte 100 may further include the interlayer 130 so that a binding force between the core 110 and the shell 120 may be improved, and the structural stability of the core 110 and the shell 120 may be improved. The interlayer 130 may not be provided.

The interlayer 130 may have a third thickness T3 and a third length L3. For example, the third length L3 of the interlayer 130 may be greater than the first length L1 of the core 110 and less than the second length L2 of the shell 120. For example, the third length L3 of the interlayer 130 may be in a range of about 101 % to about 150 %, about 101 % to about 120 %, or about 101 % to about 110 % of the first length L1 of the core 110. The third thickness T3 of the interlayer 130 may be, for example, in a range of about 1 % to about 5 0%, about 1 % to about 20 %, or about 1 % to about 10 % of the first thickness T1 of the core 110. A material of the interlayer 130 may be selected from materials utilized in the core 110 and materials utilized in the shell 120. The material of the interlayer 130 may be, for example, a polymer.

Referring to FIG. 5A, the cathode layer 10 may include the cathode current collector 11 and the cathode active material layer 12, and the cathode active material layer 12 may include a first region 12A adjacent to the cathode current collector 11 and a second region 12B adjacent to the solid electrolyte layer 30. For example, the first 2D sulfide-based solid electrolyte 100 may be disposed in the first region 12A and may be absent from the second region 12B. A thickness of the first region 12A may be 50 % or less, 40 % or less, 30 % or less, or 20 % or less of the total thickness of the cathode active material layer 12. The first 2D sulfide-based solid electrolyte 100 may be uniformly distributed, for example, in the first region 12A. In other embodiments, the first 2D sulfide-based solid electrolyte 100 may have a concentration gradient in which a concentration decreases in the first region 12A, for example, in a direction from the cathode current collector 11 to the solid electrolyte layer 30. The first 2D sulfide-based solid electrolyte 100 may be disposed in the first region 12A and may be absent from the second region 12B, and thus a long-distance ion conduction path may be more easily formed in the first region 12A having an increased separation distance from the cathode layer 10, which may allow lithium ions to be more easily conducted into the cathode active material layer 12. In some embodiments, an increase in internal resistance of a lithium battery during charging or discharging may be suppressed or reduced, and the cycle characteristics of the lithium battery may be further improved.

Referring to FIG. 5B, the cathode layer 10 may include the cathode current collector 11 and the cathode active material layer 12, and the cathode active material layer 12 may include a first region 12A adjacent to the cathode current collector 11 and a second region 12B adjacent to the solid electrolyte layer 30. For example, the first 2D sulfide-based solid electrolyte 100 may be disposed in the second region 12B and may be absent from the first region 12A. A thickness of the second region 12B may be about 50 % or less, about 40 % or less, about 30 % or less, or about 20 % or less of the total thickness of the cathode active material layer 12. The first 2D sulfide-based solid electrolyte 100 may be uniformly distributed, for example, in the second region 12B. In other embodiments, the first 2D sulfide-based solid electrolyte 100 may have a concentration gradient in which a concentration decreases in the second region 12B, for example, in a direction from the solid electrolyte layer 30 to the cathode current collector 11. The first 2D sulfide-based solid electrolyte 100 may be disposed in the second region 12B adjacent to the solid electrolyte layer 30 so that the interfacial resistance between the solid electrolyte layer 30 and the cathode active material layer 12 may be more effectively decreased, and lithium ions may be more easily conducted into the cathode active material layer 12 from the solid electrolyte layer 30. In some embodiments, an increase in internal resistance of a lithium battery during charging or discharging may be suppressed or reduced, and the cycle characteristics of the lithium battery may be further improved.

Referring to FIG. 5C, the cathode layer 10 may include the cathode current collector 11 and the cathode active material layer 12, and the cathode active material layer 12 may include a first region 12A adjacent to the cathode current collector 11 and a second region 12B adjacent to the solid electrolyte layer 30. For example, the first 2D sulfide-based solid electrolyte 100 may be disposed in the first region 12A and the second region 12B. The first 2D sulfide-based solid electrolyte 100 may be disposed in both (e.g., simultaneously) of the first region 12A and the second region 12B, and thus the overall ionic conductivity of the cathode active material layer 12 may be improved.

Referring to FIGS. 5A to 5C and 10 to 13, a content (e.g., amount) of the first 2D sulfide-based solid electrolyte 100 may be, for example, in a range of about 1 wt% to about 50 wt%, about 1 wt% to about 40 wt%, about 5 wt% to about 40 wt%, about 10 wt% to about 40 wt%, about 15 wt% to about 40 wt%, about 20 wt% to about 40 wt%, or about 25 wt% to about 40 wt% of the total weight of the cathode active material layer 12. The content (e.g., amount) of the first 2D sulfide-based solid electrolyte 100 may be, for example, in a range of about 1 wt% to about 30 wt%, about 1 wt% to about 25 wt%, about 1 wt% to about 20 wt%, about 1 wt% to about 10 wt%, or about 1 wt% to about 5 wt% of the total weight of the cathode active material layer 12. The cathode active material layer 12 may have a content (e.g., amount) of the first 2D sulfide-based solid electrolyte 100 in such a range so that an ion conduction path may extend in the cathode active material layer 12 including the first 2D sulfide-based solid electrolyte 100, a change in volume of a cathode active material may be more effectively accommodated during charging or discharging of a lithium battery, and the ion conduction path in the lithium battery may be maintained despite the change in volume of the cathode active material. In some embodiments, the deterioration of a lithium battery may be further suppressed or reduced, and the cycle characteristics of the lithium battery may be further improved. If (e.g., when) the content (e.g., amount) of the first 2D sulfide-based solid electrolyte 100 is excessively high, interfacial resistance may increase due to incomplete filling between the first two-dimensional sulfide-based solid electrolytes 100 in the cathode active material layer 12.

The cathode active material layer 12 may further include an irregular-shaped sulfide-based solid electrolyte that is distinguished from the first 2D sulfide-based solid electrolyte 100. An aspect ratio of the irregular-shaped sulfide-based solid electrolyte may be less than about 2, less than about 1.5, or less than about 1.3. A particle diameter of the irregular-shaped sulfide-based solid electrolyte may be, for example, in a range of about 0.1 µm to about 50 µm, about 0.1 µm to about 50 µm, about 0.1 µm to about 30 µm, about 0.1 µm to about 20 µm, about 0.1 µm to about 10 µm, about 0.1 µm to about 5 µm, or about 0.1 µm to about 3 µm. A weight ratio of the first 2D sulfide-based solid electrolyte 100 to the irregular-shaped sulfide-based solid electrolyte may be, for example, in a range of about 1:99 to about 99:1, about 5:95 to about 95:5, about 10:90 to about 90:10, about 20:80 to about 80:20, or about 30:70 to about 70:30. The weight ratio of the first 2D sulfide-based solid electrolyte 100 to the irregular-shaped sulfide-based solid electrolyte may be, for example, in a range of about 1:99 to about 50:50, about 3:97 to about 40:60, about 5:95 to about 30:70, about 5:95 to about 25:75, or about 5:95 to about 20:80. The a weight ratio of the first 2D sulfide-based solid electrolyte 100 to the irregular-shaped sulfide-based solid electrolyte may be in such a range so that the deterioration of a lithium battery may be further suppressed or reduced, and the cycle characteristics of the lithium battery may be further improved.

A size of a solid electrolyte included in the cathode active material layer 12 may be smaller than a size of a solid electrolyte included in the solid electrolyte layer 30. For example, a D50 average particle diameter of the solid electrolyte included in the cathode active material layer 12 may be about 90 % or less, about 80% or less, about 70 % or less, about 60 % or less, about 50 % or less, about 40 % or less, about 30 % or less, or about 20 % or less of a D50 average particle diameter of the solid electrolyte included in the solid electrolyte layer 30. The D50 average particle diameter may be, for example, a median particle diameter (D50). The median particle diameter (D50) may be a particle size corresponding to a about 50 % cumulative volume if (e.g., when) a particle size distribution measured through a laser diffraction method is calculated from particles having a smaller particle size. A particle diameter of a sulfide-based solid electrolyte may be measured by utilizing, for example, a measuring device utilizing a laser diffraction method or a dynamic light scattering method. For example, a particle diameter may be measured by utilizing a laser scattering particle size distribution meter (for example, LA-920 manufactured by Horiba Corporation) and may be a value of a median diameter (D50) if (e.g., when) metal oxide particles are accumulated to about 50 % from smaller particles in volume conversion. In other embodiments, the particle diameter of the sulfide-based solid electrolyte may be measured from a SEM image or an optical microscope.

### [Cathode layer: Cathode active material]

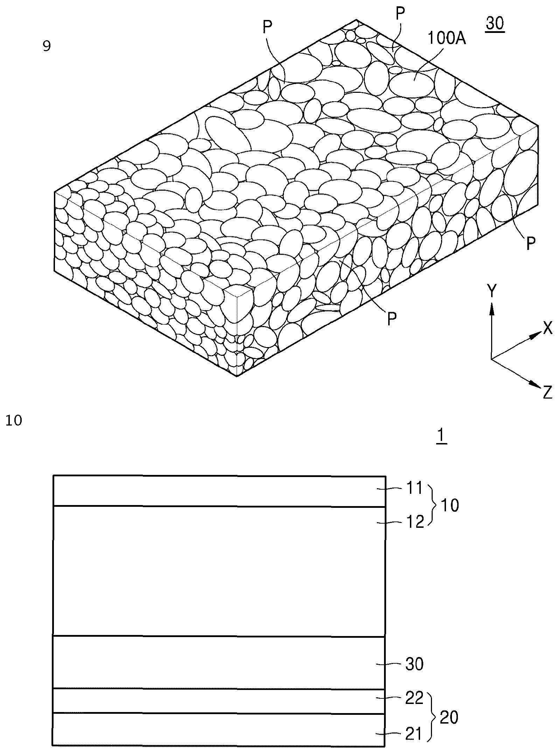

Referring to FIGS. 10 to 14, the cathode active material layer 12 may include, for example, a cathode active material.

The cathode active material included in the cathode active material layer 12 may be a cathode active material that may reversibly absorb and desorb lithium ions. The cathode active material may include, for example, an oxide-based cathode active material, a sulfide-based cathode active material, or a combination thereof.

The oxide-based cathode active material may include, for example, a lithium transition metal oxide, a metal oxide, or a combination thereof. The lithium transition metal oxide may include, for example, lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof. Lithium oxide may include, for example, iron oxide, vanadium oxide, or a combination thereof.

The sulfide-based cathode active material may include, for example, nickel sulfide, copper sulfide, Li₂S, a Li₂S-containing composite, or a combination thereof.

The oxide-based cathode active material may include, for example, at least one composite oxide of lithium or a metal selected from among cobalt, manganese, nickel, and a combination thereof. The oxide-based cathode active material may include, for example, a compound represented by at least one of formulas of LiₐA_{1-b}B'_{b}D₂, wherein 0.90≤a≤1 and 0≤b≤0.5; LiₐE_{1-b}B'_{b}O_{2-c}D_{c}, wherein 0.90≤a≤1, 0≤b≤0.5, and 0≤c≤0.0; LiE_{2-b}B'_{b}O_{4-c}D_{c}, wherein 0≤b≤0.5 and 0≤c≤0.05; LiₐNi_{1-b-c}Co_{b}B'_{c}D_{α}, wherein 0.90≤a≤1, 0≤b≤0.5, 0≤c≤0.05, and 0<α≤2; LiₐNi_{1-b-c}CO_{b}B'_{c}O_{2-α}F'_{α}, wherein 0.90≤a≤1, 0≤b≤0.5, 0≤c≤0.05, and 0<α<2; LiₐNi_{1-b-c}CO_{b}B'_{c}O_{2-α}F'_{α}, wherein 0.90≤a≤1, 0≤b≤0.5, 0≤c≤0.05, and 0<α<2; LiₐNi_{1-b-c}Mn_{b}B'_{c}D_{α}, wherein 0.90≤a≤1, 0≤b≤0.5, 0≤c≤0.05, and 0<α≤2; LiₐNi_{1-b-c}Mn_{b}B'_{c}O_{2-α}F'_{α}, wherein 0.90≤a≤ 1, 0≤b≤0.5, 0≤c≤0.05, and 0<α<2; LiₐNi_{1-b-c}Mn_{b}B'_{c}O_{2-α}F'_{α}, wherein 0.90≤a≤1, 0≤b≤0.5, 0≤c≤0.05, and 0<α<2; LiₐNi_{b}E_{c}G_{d}O₂, wherein 0.90≤a≤1, 0≤b≤0.9, 0≤c≤0.5, and 0.001≤d≤0.1; LiₐNi_{b}Co_{c}Mn_{d}GₑO₂, wherein 0.90≤a≤1, 0≤b≤0.9, 0≤c≤0.5, 0≤d≤0.5, and 0.001≤e≤0.1; LiₐNiG_{b}O₂, wherein 0.90≤a≤1, and 0.001≤b≤0.1; LiₐCoG_{b}O₂, wherein 0.90≤a≤1 and 0.001≤b≤0.1; LiₐMnG_{b}O₂, wherein 0.90≤a≤1 and 0.001≤b≤0.1; LiₐMn₂G_{b}O₄, wherein 0.90≤a≤1 and 0.001≤b≤0.1; LiV₂O₅; LiI'O₂; LiNiVO₄; Li_{(3-f)}J₂(PO₄)₃, wherein 0≤f≤2; Li_{(3-f)}Fe₂(PO₄)₃, wherein 0≤f≤2; or LiFePO₄.

In the formulas representing the previously-described compounds, A may be Ni, Co, Mn, or a combination thereof, B' may be Al, Ni, Co, Mn, Cr, Fe, Mg, Sr, V, a rare earth element, or a combination thereof, D may be O, F, S, P, or a combination thereof, E may be Co, Mn, or a combination thereof, F' may be F, S, P, or a combination thereof, G may be Al, Cr, Mn, Fe, Mg, La, Ce, Sr, V, or a combination thereof, Q may be Ti, Mo, Mn, or a combination thereof, I' may be Cr, V, Fe, Sc, Y, or a combination thereof, and J may be V, Cr, Mn, Co, Ni, Cu, or a combination thereof. A compound in which a coating layer is added to a surface of the above compound may also be utilized, and a mixture of the above compound and a compound in which a coating layer is added may also be utilized. The coating layer added to the surface of the previously described compound may include, for example, a coating element compound of an oxide or a hydroxide of a coating element, an oxyhydroxide of a coating element, an oxycarbonate of a coating element, or a hydroxycarbonate of a coating element. A compound constituting the coating layer may be amorphous or crystalline. The coating element included in the coating layer may include Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. A coating method may include, for example, spray coating, dipping, and/or the like. A specific coating method may be well understood by those skilled in the art, and thus a detailed description thereof will not be provided.

The oxide-based cathode active material may include, for example, at least one of lithium transition metal oxides represented by Formulas 1 to 8:

<Formula 1> LiₐNiₓCo_{y}M_{z}O_{2-b}A_{b}

in Formula 1,
1.0≤a≤1.2, 0≤b≤0.2, 0.8≤x<1, 0≤y≤0.3, 0<z≤0.3, x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and

A may be F, S, Cl, Br, or a combination thereof,

<Formula 2> LiNiₓCo_{y}Mn_{z}O₂

<Formula 3> LiNiₓCo_{y}Al_{z}O₂

in Formula 2 and Formula 3, 0.8≤x≤0.95, 0≤y≤0.2, 0<z≤0.2, and x+y+z=1,

<Formula 4> LiNiₓCo_{y}Mn_{z}Al_{w}O₂

in Formula 4, 0.8≤x≤0.95, 0≤y≤0.2, 0<z≤0.2, 0<w≤0.2, and x+y+z+w=1,

<Formula 5> LiₐCoₓM_{y}O_{2-b}A_{b}

in Formula 5,
1.0≤a≤1.2, 0≤b≤0.2, 0.9≤x≤1, 0≤y≤0.1, x+y=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and

A may be F, S, Cl, Br, or a combination thereof,

<Formula 6> LiₐNiₓMn_{y}M'_{z}O_{2-b}A_{b}

in Formula 6,
1.0≤a≤1.2, 0≤b≤0.2, 0<x≤0.3, 0.5≤y<1, 0<z≤0.3, x+y+z=1,
M' may be cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B), or a combination thereof, and

A may be F, S, Cl, Br, or a combination thereof,

<Formula 7> LiₐM1ₓM2_{y}PO_{4-b}X_{b}

in Formula 7, 0.90≤a≤1.1, 0≤x≤0.9, 0≤y≤0.5, 0.9<x+y<1.1, 0≤b≤2,
M1 may be chromium (Cr), manganese (Mn), iron (Fe), cobalt (Co), nickel (Ni), copper (Cu), zirconium (Zr), or a combination thereof,
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P, or a combination thereof, and

<Formula 8> LiₐM3_{z}PO₄

in Formula 8, 0.90≤a≤1.1, 0.9≤z≤1.1, and
M3 may be chromium (Cr), manganese (Mn), iron (Fe), cobalt (Co), nickel (Ni), copper (Cu), zirconium (Zr), or a combination thereof.

The oxide-based cathode active material may be covered with a coating layer. As the coating layer, any coating layer may be utilized as long as the coating layer may be suitable as a coating layer for a cathode active material of an all-solid secondary battery. The coating layer may include, for example, Li₂O-ZrO₂ (LZO).

A size (e.g., diameter) of the oxide-based cathode active material may be, for example, in a range of about 0.1 µm to about 30 µm, about 0.5 µm to about 20 µm, or about 1 µm to about 15 µm. The oxide-based cathode active material may include, for example, (e.g., may be in a form of) single crystal particles or polycrystal particles.

The sulfide-based cathode active material may include, for example, a Li₂S-containing composite. The Li₂S-containing composite may include, for example, a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, a composite of Li₂S and a metal carbide, a composite of Li₂S, carbon, and a metal carbide, a composite of Li₂S and a metal nitride, a composite of Li₂S, a carbon, and a metal nitride, or a combination thereof.

The composite of Li₂S and carbon may include carbon. As carbon, for example, any material may be utilized as long as the material may be a material including carbon atoms and may be utilized as a conductive material in the art. Carbon may be, for example, crystalline carbon, amorphous carbon, or a combination thereof. Carbon may be, for example, a sintered product of a carbon precursor. Carbon may include, for example, carbon nanostructures. The carbon nanostructures may include, for example, one-dimensional carbon nanostructures, 2D carbon nanostructures, three-dimensional carbon nanostructures, or a combination thereof. The carbon nanostructures may include, for example, carbon nanotubes (CNTs), carbon nanofibers (CNFs), carbon nanobelts, carbon nanorods, graphene, graphene oxide (GO), reduced graphene oxide (rGO), graphene balls (GB), or a combination thereof. Carbon may be, for example, porous carbon or non-porous carbon. The porous carbon may include, for example, periodic and regular 2D or three-dimensional pores. The porous carbon may include, for example, CB such as KB, AB, Denka black, thermal black, or channel black; graphite; activated carbon; or a combination thereof. The form of carbon may be, for example, a particle form, a sheet form, a flake form, and/or the like, but one or more embodiments are not limited thereto. Any material may be utilized as long as the material may be utilized as carbon in the art. A method of preparing the composite of Li₂S and carbon may be a dry method, a wet method, or a combination thereof, but is not limited thereto. In the art, the method of preparing the composite of Li₂S and carbon may include, for example, milling, heat treatment, deposition, and/or the like, but one or more embodiments are not limited thereto. Any method may be utilized as long as the method may be utilized in the art.

The composite of Li₂S, carbon, and the solid electrolyte may include carbon and the solid electrolyte. Carbon may be defined as for the previously-described composite of Li₂S and carbon. The solid electrolyte may be, for example, an amorphous solid electrolyte, and any material may be utilized as long as the material may be utilized as an ion conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be selected from among sulfide-based solid electrolytes utilized in a solid electrolyte layer. For example, the sulfide-based solid electrolyte may have an ionic conductivity of about 1×10⁻⁵ S/cm or more at room temperature. The sulfide-based solid electrolyte may include, for example, at least one selected from among Li₃PO₄-Li₂SO₄, Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-Lil, Li₂S-B₂S₃, Li₂S-P₂S₅-ZₘSₙ, wherein m and n are each a positive number and Z is one of Ge, Zn, and Ga, Li₂S-GeS₂, Li₂S-SiS₂-Li₃PO₄, Li₂S-SiS₂-LiₚMO_{q}, wherein p and q are each a positive number and M is one of P, Si, Ge, B, Al, Ga, and In, Li₇₋ₓPS₆₋ₓClₓ, wherein 0≤x≤2, Li₇₋ₓPS₆₋ₓBrₓ, wherein , 0≤x≤2, and Li₇₋ₓPS₆₋ₓIₓ, wherein , 0≤x≤2. The oxide-based solid electrolyte may include, for example, Li, O, and a transition metal element and may optionally further include other elements. For example, the oxide-based solid electrolyte may be a solid electrolyte having an ionic conductivity of about 1×10⁻⁵ S/cm or more at room temperature. The oxide-based solid electrolyte may be selected from oxide-based solid electrolytes utilized in the solid electrolyte layer. The solid electrolyte may be, for example, a mixture of a sulfide-based solid electrolyte and a lithium salt. For example, the solid electrolyte may include a mixture of Li₃PO₄-Li₂SO₄ and a binary lithium salt or a mixture of Li₃PO₄-Li₂SO₄ and a ternary lithium salt.

The composite of Li₂S and the solid electrolyte may include the solid electrolyte. The solid electrolyte may be defined as for the previously-described composite of Li₂S, carbon, and the solid electrolyte.

The composite of Li₂S and the lithium salt may include a lithium salt compound. The lithium salt compound may not include (e.g., may exclude), for example, a sulfur (S) atom. The lithium salt compound may be, for example, a binary compound including lithium and one type or kind of element selected from among Groups 13 to 17 of the periodic table of elements. The binary compound may include, for example, at least one selected from among LiF, LiCl, LiBr, Lil, LiH, Li₂S, Li₂O, Li₂Se, Li₂Te, Li₃N, Li₃P, Li₃As, Li₃Sb, LiI₃, and LiB₃. The lithium salt compound may be, for example, a ternary compound including lithium and two types (kinds) of elements selected from among Groups 13 to 17 of the periodic table of elements. The ternary compound may include, for example, at least one selected from among Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. The lithium salt compound may include at least one lithium halide compound selected from among LiF, LiCl, LiBr, and Lil. The composite of Li₂S and the solid electrolyte may include the solid electrolyte. The solid electrolyte may be defined as for the previously-described solid electrolyte utilized in the composite of Li₂S, carbon, and the solid electrolyte. The composite of Li₂S and the solid electrolyte may include, for example, a composite of Li₂S and at least one lithium salt selected from among LiF, LiCl, LiBr, Lil, LiH, Li₂S, Li₂O, Li₂Se, Li₂Te, Li₃N, Li₃P, Li₃As, Li₃Sb, LiI₃, and LiB₃.

The composite of Li₂S, the lithium salt, and carbon may include a lithium salt compound and carbon. Carbon may be defined as for the previously-described composite of Li₂S and carbon.

The composite of Li₂S and the metal carbide may include the metal carbide. The metal carbide may be, for example, a 2D metal carbide. The 2D metal carbide may be, for example, MXene. The 2D metal carbide may be represented, for example, by Mₙ₊₁CₙTₓ, wherein M is a transition metal, T is an end group, T is O, OH, and/or F, n=1, 2, or 3, and x is the number of end groups. The 2D metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or a combination thereof. A surface of the 2D metal carbide may be terminated with O, OH, and/or F.

The composite of Li₂S, carbon, and the metal carbide may include carbon and the metal carbide. Carbon may be defined as for the previously-described composite of Li₂S and carbon. The metal carbide may be defined as for the previously-described composite of Li₂S and the metal carbide.

The composite of Li₂S and the metal nitride may include the metal nitride. The metal nitride may be, for example, a 2D metal nitride. The 2D metal nitride may be represented, for example, by Mₙ₊₁NₙTₓ, wherein M is a transition metal, T is an end group, T is O, OH, and/or F, n=1, 2, or 3, and x is the number of end groups. A surface of the 2D metal nitride may be terminated with O, OH, and/or F.

The composite of Li₂S, carbon, and the metal nitride may include carbon and the metal nitride. Carbon may be defined as for the previously-described composite of Li₂S and carbon. The metal carbide may be defined as for the previously-described composite of Li₂S and the metal nitride.

The Li₂S-containing composite may further include, for example, a second 2D sulfide-based solid electrolyte. The Li₂S-containing composite may be a composite of Li₂S and a second 2D sulfide-based solid electrolyte or a composite of Li₂S, a second 2D sulfide-based solid electrolyte, and the previously-described carbon, solid electrolyte, lithium salt, metal carbide, or metal nitride.

The Li₂S-containing composite may further include the second 2D sulfide-based solid electrolyte so that the deterioration of a lithium battery may be further suppressed or reduced, and the cycle characteristics of the lithium battery may be further improved. A size of the second 2D sulfide-based solid electrolyte may be smaller than a size of the first 2D sulfide-based solid electrolyte 100. The length and/or thickness of the second 2D sulfide-based solid electrolyte may be about 50 % or less, about 40 % or less, about 30 % or less, about 20 % or less, or about 10 % or less of the length and/or thickness of the first 2D sulfide-based solid electrolyte 100, respectively. The length and/or thickness of the second 2D sulfide-based solid electrolyte may be in a range of about 0.1 % to about 50 %, about 0.5 % to about 40 %, about 1 % to about 30 %, about 1 % to about 20 %, or about 1 % to about 10 % of the length and/or thickness of the first 2D sulfide-based solid electrolyte 100, respectively. For example, the second 2D sulfide-based solid electrolyte may have the same shape as the first 2D sulfide-based solid electrolyte 100 and may have a smaller size than the first 2D sulfide-based solid electrolyte 100. The second 2D sulfide-based solid electrolyte may have such a reduced length and/or thickness and thus may be easily distributed in the Li₂S-containing composite. The second 2D sulfide-based solid electrolyte may have such a reduced length and/or thickness so that the deterioration of a lithium battery may be further suppressed or reduced, and the cycle characteristics of the lithium battery may be further improved.

A size of the sulfide-based cathode active material may be, for example, in a range of about 0.1 µm to about 50 µm, about 0.5 µm to about 30 µm, about 0.5 µm to about 20 µm, or about 1 µm to about 10 µm. A size of Li₂S may be, for example, in a range of about 1 nm to about 10 µm, about 10 nm to about 5 µm, about 10 nm to about 3 µm, or about 10 nm to about 1 µm. A size of the Li₂S-containing composite may be, for example, in a range of about 0.1 µm to about 50 µm, about 0.5 µm to about 30 µm, about 0.5 µm to about 20 µm, or about 1 µm to about 10 µm.

For example, the cathode active material may be a composite cathode active material including a core absorbing or desorbing lithium, and a shell disposed on the core.

The composite cathode active material may include, for example, the core absorbing and desorbing lithium, and the shell disposed along a surface of the core, wherein the shell includes at least one type or kind of a first metal oxide represented by a formula of MₐO_{b}, wherein 0<a≤3, 0<b<4, and when a is 1, 2, or 3, b is not an integer, and graphene, the first metal oxide is disposed in a graphene matrix, and M is at least one metal selected from among Groups 2 to 13, Group 15, and Group 16 of the periodic table of elements. The core that absorbs or desorbs lithium may include, for example, the previously-described Li₂S-containing composite. The Li₂S-containing composite may include, for example, a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon, and a metal nitride, or a combination thereof. The core that absorbs or desorbs lithium may include, for example, at least one of lithium transition metal oxides represented by Formulas 1 to 8. The core that absorbs or desorbs lithium may include, for example, a lithium transition metal oxide with a Ni content (e.g., amount) of about 80 mol% or more. The shell including, for example, the first metal oxide and graphene may be disposed on the core that absorbs or desorbs lithium. Graphene according to a related art may be difficult to uniformly apply on the core due to agglomeration. In other embodiments, in the composite cathode active material, a composite including a plurality of first metal oxides disposed in the graphene matrix may be utilized so that aggregation of graphene may be prevented or reduced, and also the substantially uniform shell may be disposed on the core. In some embodiments, contact between the core and an electrolyte may be effectively blocked, thereby preventing or reducing side reactions due to the contact between the core and the electrolyte. The shell including graphene may have flexibility and thus may easily accommodate a change in volume of the composite cathode active material during charging or discharging, thereby suppressing cracks from occurring inside the composite cathode active material. Graphene may have high electronic conductivity, and thus interfacial resistance between the composite cathode active material and an electrolyte may be decreased. In some embodiments, despite the introduction of the shell including graphene, the internal resistance of a lithium battery may be maintained or decreased. In other embodiments, the first metal oxide may have withstand voltage, and thus the deterioration of the Li₂S-containing composite and the lithium transition metal oxide included in the core may be prevented or reduced during charging or discharging at a high voltage. For example, the cycle characteristics and high-temperature stability of a lithium battery including the composite cathode active material may be improved. The shell may include, for example, at least one type or kind of first metal oxide or two or more types (kinds) of different first metal oxides. A metal included in the first metal oxide may include, for example, at least one selected from among Al, Nb, Mg, Sc, Ti, Zr, V, W, Mn, Fe, Co, Pd, Cu, Ag, Zn, Sb, and Se. The first metal oxide may include, for example, at least one selected from among Al₂O_{z}, wherein 0<z<3, NbOₓ, wherein 0<x<2.5, MgOₓ, wherein 0<x<1, Sc₂O_{z}, wherein 0<z<3, TiO_{y}, wherein 0<y<2, ZrO_{y}, wherein 0<y<2, V₂O_{z}, wherein 0<z<3, WO_{y}, wherein 0<y<2, MnO_{y}, wherein 0<y<2, Fe₂O_{z}, wherein 0<z<3, Co₃O_{w}, wherein 0<w<4, PdOₓ, wherein 0<x<1, CuOₓ, wherein 0<x<1, AgOₓ, wherein 0<x<1, ZnOₓ, wherein 0<x<1, Sb₂O_{z}, wherein 0<z<3, and SeO_{y}, wherein 0<y<2. The first metal oxide may be disposed in the graphene matrix, thereby improving the uniformity of the shell disposed on the core and further improving the withstand voltage of the composite cathode active material. For example, the shell may include Al₂Oₓ, wherein 0<x<3. The shell may further include at least one type or kind of a second metal oxide represented by formula of MₐO_{c}, wherein 0<a≤3, 0<c≤4, and if (e.g., when) a is 1, 2, or 3, c is an integer. M may be at least one metal selected from among Groups 2 to 13, Group 15, and Group 16 of the periodic table of elements. For example, the second metal oxide may include the same metal as the first metal oxide, and c/a that is a ratio of c to a of the second metal oxide may have a greater value than b/a that is a ratio of b to a of the first metal oxide. For example, c/a > b/a. The second metal oxide may be selected from among, for example, Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide may be a reduction product of the second metal oxide. A portion or the entirety of the second metal oxide may be reduced to obtain the first metal oxide. In some embodiments, the first metal oxide has a lower oxygen content (e.g., amount) and a lower metal oxidation number than the second metal oxide. For example, the shell may include Al₂Oₓ that is the first metal oxide and Al₂O₃ that is the second metal oxide, wherein 0<x<3. A thickness of the shell may be, for example, in a range of about 1 nm to about 5 µm, about 1 nm to about 1 µm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. The shell may have a thickness in such a range, and thus an increase in internal resistance of a lithium battery including the composite cathode active material may be suppressed or reduced. An average particle diameter of at least one selected from among the first metal oxide and the second metal oxide included in the composite may be in a range of about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. The first metal oxide and/or the second metal oxide may have a particle diameter in such a nanorange and thus may be more uniformly distributed in the graphene matrix of the composite. In some embodiments, such a composite may be uniformly applied onto the core without agglomeration to form the shell. For example, the first metal oxide and/or the second metal oxide may have a particle diameter in such a range and thus may be more uniformly disposed on the core. In some embodiments, the first metal oxide and/or the second metal oxide may be uniformly disposed on the core, thereby more effectively exhibiting withstand voltage characteristics. An average particle diameter of each of the first metal oxide and the second metal oxide may be measured, for example, through a measurement device utilizing a laser diffraction method or a dynamic light scattering method. In other embodiments, a particle diameter of each of the first metal oxide and the second metal oxide may be measured from a SEM and a transmission electron microscope.

The cathode active material may have, for example, a particulate shape such as a spherical shape or an oval shape. A particle diameter of the cathode active material is not limited and may be in a range applicable to a cathode active material of an all-solid secondary battery according to a related art. A content (e.g., amount) of the cathode active material in the cathode layer 10 is also not limited and may be in a range applicable to a cathode layer of an all-solid secondary battery according to a related art. A content (e.g., amount) of the cathode active material included in the cathode active material layer 12 may be, for example, in a range of about 10 wt% to about 99 wt%, about 10 wt% to about 90 wt%, about 10 wt% to about 80 wt%, about 10 wt% to about 70 wt%, or about 10 wt% to about 50 wt% with respect to the total weight of the cathode active material layer 12.

### [Cathode layer: Conductive material]

The cathode active material layer 12 may further include a conductive material. The conductive material may be, for example, a carbon-based conductive material, a metal-based conductive material, or a combination thereof. The carbon-based conductive material may be, for example, graphite, CB, AB, KB, a carbon fiber, or a combination thereof, but one or more embodiments are not limited thereto. Any material may be utilized as long as the material may be utilized as a carbon-based conductive material in the art. The metal-based conductive material may be a metal powder, a metal fiber, or a combination thereof, but one or more embodiments are not limited thereto. Any material may be utilized as long as the material may be utilized as a metal-based conductive material in the art. A content (e.g., amount) of the conductive material included in the cathode active material layer 12 may be, for example, in a range of about 1 wt% to about 30 wt%, about 1 wt% to about 20 wt%, or about 1 wt% to about 10 wt% of the total weight of the cathode active material layer 12.

### [Cathode layer: Binder]

The cathode active material layer 12 may further include a binder. The binder may include, for example, SBR, PTFE, PVDF, PE, and/or the like, but one or more embodiments are not limited thereto. Any material may be utilized as long as the material may be utilized as a binder in the art. A content (e.g., amount) of the binder included in the cathode active material layer 12 may be, for example, in a range of about 1 wt% to about 10 wt% of the total weight of the cathode active material layer 12. The binder may not be provided.

### [Cathode layer: Other additives]

In addition to the previously-described cathode active material, solid electrolyte, binder, and conductive material, the cathode active material layer 12 may further include, for example, additives such as a filler, a coating agent, a dispersant, and an ion-conductive adjuvant.

As a filler, a coating agent, a dispersant, an ion-conductive adjuvant, and/or the like that may be included in the cathode active material layer 12, suitable materials generally utilized in electrodes of an all-solid secondary battery may be utilized.

### [Cathode layer: Cathode current collector]

The cathode current collector 11 may be provided as a plate, foil, and/or the like consisting of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may not be provided. A thickness of the cathode current collector 11 may be, for example, in a range of about 1 µm to about 100 µm, about 1 µm to about 50 µm, about 5 µm to about 25 µm, or about 10 µm to about 20 µm.

The cathode current collector 11 may include, for example, a base film and a metal layer disposed on at least one surface (e.g., one or two (e.g., opposite) surfaces) of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), PI, or a combination thereof. The base film may be, for example, an insulator. The base film may include an insulating thermoplastic polymer, and thus, if (e.g., when) a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse and may be cut if (e.g., when) an overcurrent occurs, thereby performing a short circuit prevention function. A thickness of the metal layer may be adjusted to adjust a limit current and a maximum current. The metal layer may be plated or deposited on the base film. If (e.g., when) the thickness of the metal layer decreases, a limit current and/or a maximum current of the cathode current collector 11 may decrease, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake including (e.g., consisting of) the same material as a metal of the metal layer. The metal chip may be, for example, metal foil or a metal mesh. The metal chip may be, for example, aluminum foil, copper foil, or SUS foil. The metal chip may be disposed on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of about 1 µm to about 50 µm, about 1.5 µm to about 50 µm, about 1.5 µm to about 40 µm, or about 1 µm to about 30 µm. The base film may have a thickness in such a range, and thus a weight of an electrode assembly may be more effectively reduced. A melting point of the base film may be, for example, in a range of about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, in a range of about 0.01 µm to about 3 µm, about 0.1 µm to about 3 µm, about 0.1 µm to about 2 µm, or about 0.1 µm to about 1 µm. The metal layer may have a thickness in such a range, and thus the stability of an electrode assembly may be secured while conductivity is maintained. A thickness of the metal chip may be, for example, in a range of about 2 µm to about 10 µm, about 2 µm to about 7 µm, or about 4 µm to about 6 µm. The metal chip may have a thickness in such a range, and thus the metal layer and the lead tab may be more easily connected. The cathode current collector 11 may have such a structure, and thus a weight of the cathode layer 10 may be reduced, thereby improving the energy density of the cathode layer 10 and a lithium battery.

### [Cathode layer: inactive member]

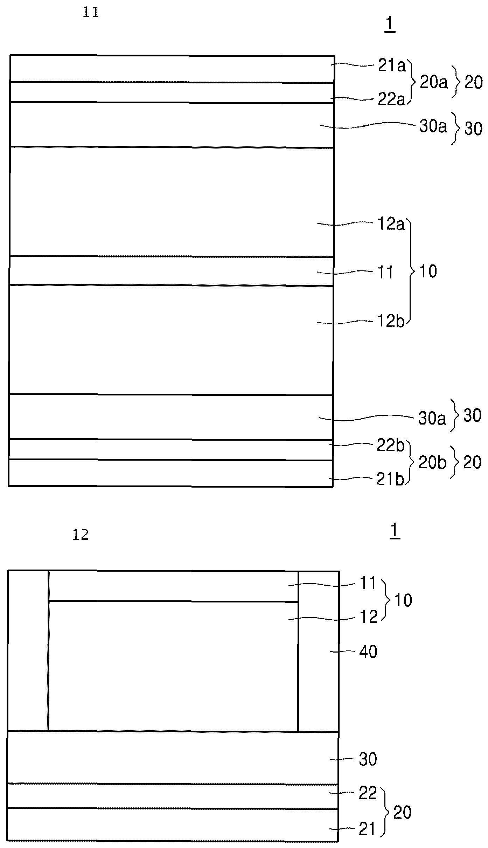

Referring to FIGS. 12 to 14, the cathode layer 10 may include the cathode current collector 11, the cathode active material layer 12 disposed on at least one surface of the cathode current collector 11 and may further include an inactive member 40 (40a or 40b) disposed on at least one side surface of the cathode layer 10.

The inactive member 40 may be provided to prevent or reduce cracks of the solid electrolyte layer 30 during manufacturing and/or charging/discharging of the all-solid secondary battery 1, thereby improving the cycle characteristics of the all-solid secondary battery 1. In the all-solid secondary battery 1 that does not include the inactive member 40, a nonuniform pressure may be applied to the solid electrolyte layer 30 in contact with the cathode 10 during manufacturing and/or charging/discharging of the all-solid secondary battery 1 to cause cracks in the solid electrolyte layer 30, and a lithium metal may be grown through the cracks to increase a possibility of the occurrence of a short circuit.

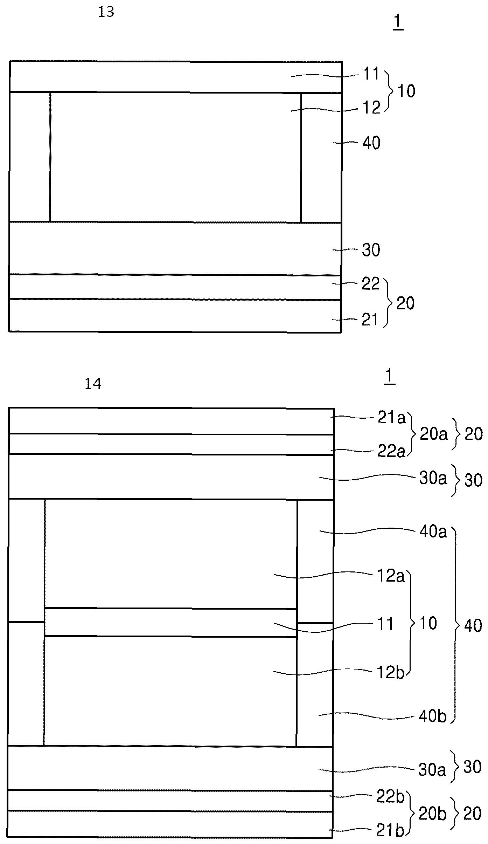

The inactive member 40 may be disposed along the side surface of the cathode layer 10 to surround the cathode layer 10. The inactive member 40 may surround, for example, a portion or the entirety of the side surface of the cathode layer 10 and may be in contact with the solid electrolyte layer 30. The inactive member 40 may surround the side surface of the cathode layer 10 and may be in contact with the solid electrolyte layer 30, thereby effectively suppressing cracks of the solid electrolyte layer 30, which are caused in a portion of the solid electrolyte layer 30, which is not in contact with the cathode layer 10, by a pressure difference during a pressing process. The inactive member 40 may surround the side surface of the cathode layer 10 and may be separated from the anode layer 20, for example, the first anode active material layer 22. The inactive member 40 may surround the side surface of the cathode layer 10, may be in contact with the solid electrolyte layer 30, and may be separated from the anode layer 20. In some embodiments, a possibility of a short circuit occurring due to physical contact between the cathode layer 10 and the first anode active material layer 22 or a possibility of a short circuit occurring due to the overcharging of lithium may be suppressed or reduced. Referring to FIG. 12, the inactive member 40 may be disposed on at least one side surface of the cathode active material layer 12 and concurrently (e.g., simultaneously) may be disposed on at least one side surface of the cathode current collector 11, thereby more effectively suppressing a possibility of a short circuit occurring due to contact between the cathode current collector 11 and the anode layer 20. In other embodiments, referring to FIG. 13, the inactive member 40 may be disposed on at least one side surface of the cathode active material layer 12 and may be disposed between the solid electrolyte layer 30 and the cathode current collector 11 opposite to the solid electrolyte layer 30. The inactive member 40 may not be disposed on at least one side surface of the cathode current collector 11. The inactive member 40 may be disposed between the cathode current collector 11 and the solid electrolyte layer 30, thereby effectively preventing or reducing a short circuit due to contact between the cathode current collector 11 and the anode layer 20.

In some embodiments, a portion of the entirety of the inactive member 40 (40a or 40b) may be disposed to be spaced apart from the side surface of the cathode layer 10. A portion or the entirety of the inactive member 40 (40a or 40b) may be disposed to be spaced apart from the side surface of the cathode layer 10 so that a manufacturing process of the all-solid secondary battery 1 may become easier, and a manufacturing speed of the all-solid secondary battery 1 may be increased. A portion or the entirety of the inactive member 40 (40a or 40b) may be disposed to be spaced apart from the side surface of the cathode layer 10, and thus a change in volume in a lateral direction of the cathode layer 10 during charging or discharging may be more effectively accommodated, thereby further improving the lifespan characteristics of the all-solid secondary battery 1. Distances between the inactive members 40 (40a and 40b) and the side surface of the cathode layer 10 may each independently be, for example, in a range of about 0.1 µm to about 10 mm, about 1 µm to about 1 mm, about 1 µm to about 500 µm, about 1 µm to about 100 µm, about 1 µm to about 50 µm, or about 1 µm to about 10 µm.

The inactive member 40 may further include a position determination portion configured to determine a position of the inactive member 40 on the solid electrolyte layer 30. The inactive member 40 may include the position determination, and thus the position of the inactive member 40 disposed on the solid electrolyte layer 30 may be easily determined. In some embodiments, a manufacturing speed of the all-solid secondary battery 1 may be increased, and the ease of manufacturing thereof may be improved.

Referring to FIGS. 13 and 14, the inactive member 40 may extend from one side surface of the cathode layer 10 to an end portion of the solid electrolyte layer 30. The inactive member 40 may extend to the end portion of the solid electrolyte layer 30 so that cracks occurring at the end portion of the solid electrolyte layer 30 may be suppressed or reduced. The end portion of the solid electrolyte layer 30 may be an outermost portion in contact with a side surface of the solid electrolyte layer 30. The inactive member 40 may extend to the outermost portion in contact with the side surface of the solid electrolyte layer 30. The inactive member 40 may be separated from the anode layer 20, for example, the first anode active material layer 22. The inactive member 40 may extend to the end portion of the solid electrolyte layer 30 but may not be in contact with the anode layer 20. For example, the inactive member 40 may fill a space extending from one side surface of the cathode layer 10 to the end portion of the solid electrolyte layer 30.

The inactive member 40 may be, for example, a gasket. By utilizing the gasket as the inactive member 40, cracks of the solid electrolyte layer 30 caused by a pressure difference during a pressing process may be effectively suppressed or reduced.

The inactive member 40 may have, for example, a single-layer structure. In other embodiments, the inactive member 40 may have a multi-layer structure. In the inactive member 40 having the multi-layer structure, respective layers may have different compositions. The inactive member 40 having the multi-layer structure may have, for example, a two-layer structure, a three-layer structure, a four-layer structure, or a five-layer structure. The inactive member 40 having the multi-layer structure may include, for example, one or more adhesive layers and one or more support layers. For example, the adhesive layer may effectively prevent or reduce separation between the cathode layer 10 and the solid electrolyte layer 30 due to a change in volume of the cathode layer 10 which occurs during a charging/discharging process of the all-solid secondary battery 1 and may provide a binding force between the support layer and other layers to improve the film strength of the inactive member 40. The support layer may provide a supporting force to the inactive member 40, may prevent or reduce the nonuniformity of pressure applied to the solid electrolyte layer 30 during a pressing process or a charging/discharging process, and may prevent or reduce the shape deformation of the all-solid secondary battery 1 to be manufactured.

Referring to FIG. 14, the all-solid secondary battery 1 may include the cathode layer 10, the anode layer 20, and the solid electrolyte layer 30 (30a or 30b) disposed therebetween, wherein the cathode layer 10 includes the cathode current collector 11 and each of a first cathode active material layer 12a and a second cathode active material layer 12b disposed on two surfaces of the cathode current collector 11, the solid electrode layer 30 includes each of a first solid electrolyte layer 30a in contact with the first cathode active material layer 12a and a second solid electrolyte layer 30b in contact with the second cathode active material layer 12b, the anode layer 20 includes each of a first anode layer 20a in contact with the first solid electrolyte layer 30a and a second cathode layer 20b in contact with the second solid electrolyte layer 30b, and the inactive member 40 is disposed between the first solid electrolyte layer 30a and the second solid electrolyte layer 30b opposite to each other to surround a side surface of the cathode layer 10. The inactive member 40 may include, for example, a first inactive member 40a in contact with the first solid electrolyte layer 30a and a second inactive member 40b in contact with the second solid electrolyte layer 30b. In some embodiments, the all-solid secondary battery 1 may have a bi-cell structure. The all-solid secondary battery 1 may have such a bi-cell structure, and thus each of the solid electrolyte layer 30 and the anode layer 20 may be disposed with respect to the cathode layer 10, thereby more effectively suppressing structural deformation due to a pressure applied during manufacturing of the all-solid secondary battery 1. In some embodiments, cracks of the solid electrolyte layer 30 may be suppressed or reduced during a manufacturing process and/or a charging/discharging process of the all-solid secondary battery 1, thereby preventing or reducing a short circuit in the all-solid secondary battery 1 and further improving the cycle characteristics of the all-solid secondary battery 1. In other embodiments, only one cathode current collector 11 may be utilized for a plurality of cathode active material layers 12a and 12b, and thus the energy density of the all-solid secondary battery 1 may be increased.

Referring to FIGS. 12 to 14, the inactive member 40 may be, for example, a flame-retardant inactive member. The flame-retardant inactive member may provide flame retardancy to prevent or reduce a possibility of thermal runaway and ignition of the all-solid secondary battery 1. In some embodiments, the safety of the all-solid secondary battery 1 may be further improved. The flame-retardant inactive member may be configured to absorb residual moisture in the all-solid secondary battery 1, thereby preventing or reducing the deterioration of the all-solid secondary battery 1 and improving the lifespan characteristics of the all-solid secondary battery 1.

The flame-retardant inactive member may include, for example, a matrix and a filler. The matrix may include, for example, a substrate and a reinforcing material. The matrix may include, for example, a fibrous substrate and a fibrous reinforcing material. The matrix may include the substrate to have elasticity. In some embodiments, the matrix may effectively accommodate a change in volume of the all-solid secondary battery 1 during charging or discharging and may be disposed at any one of one or more suitable positions. The substrate included in the matrix may include, for example, a first fibrous material. By including the first fibrous material, the substrate may effectively accommodate a change in volume of the cathode layer 10 which occurs during a charging/discharging process of the all-solid secondary battery 1 and may effectively suppress or reduce the deformation of the inactive member 40 due to the change in volume of the cathode layer 10. The first fibrous material may be, for example, a material having an aspect ratio of about 5 or more, about 20 or more, or about 50 or more. The first fibrous material may be, for example, a material having an aspect ratio of about 5 to about 1,000, about 20 to about 1,000, or about 50 to about 1,000. The first fibrous material may be, for example, an insulating material. The first fibrous material may be the insulating material, and thus a short circuit between the cathode layer 10 and the anode layer 20, which occur due to lithium dendrites and/or the like during charging or discharging of the all-solid secondary battery 1, may be effectively prevented or reduced. The first fibrous material may include, for example, at least one selected from among a pulp fiber, an insulating polymer fiber, and an ion conductive polymer fiber. The matrix may include the reinforcing material, and thus the strength of the matrix may be improved. In some embodiments, the matrix may prevent or reduce an excessive change in volume of the all-solid secondary battery 1 during changing/discharging and may prevent or reduce the deformation of the all-solid secondary battery 1. The reinforcing material included in the matrix may include, for example, a second fibrous material. The reinforcing material may include the second fibrous material, and thus the strength of the matrix may more uniformly increase. The second fibrous material may be, for example, a material having an aspect ratio of about 3 or more, about 5 or more, or about 10 or more. The second fibrous material may be, for example, a material having an aspect ratio of about 3 to about 100, about 5 to about 100, or about 10 to about 100. The second fibrous material may be, for example, a flame-retardant material. The second fibrous material may be the flame-retardant material, and thus ignition due to thermal runaway occurring during a charging/discharging process of the all-solid secondary battery 1 or an external impact may be effectively suppressed or reduced. The second fibrous material may include, for example, a glass fiber, a metal oxide fiber, or a ceramic fiber.

The flame-retardant inactive member may include a filler in addition to the matrix. The filler may be disposed in the matrix, on a surface of the matrix, or both (e.g., simultaneously) in the matrix and on the surface. The filler may include, for example, an inorganic material. The filler included in the flame-retardant inactive member may be, for example, a moisture getter, a flame retardant, or a lithium immobilizer. For example, the moisture getter may adsorb moisture at a temperature of less than about 100 °C to remove moisture remaining in the all-solid secondary battery 1, thereby preventing or reducing the deterioration of the all-solid secondary battery 1. In some embodiments, if (e.g., when) a temperature of the all-solid secondary battery 1 increases to about 150 °C or more due to thermal runaway occurring during a charging/discharging process of the all-solid secondary battery 1 or an external impact, the moisture getter may release the adsorbed moisture to effectively suppress or reduce the ignition of the all-solid secondary battery 1. The moisture getter may include, for example, a metal hydroxide having moisture adsorption properties. The metal hydroxide included in the filler may be, for example, Mg(OH)₂, Fe(OH)₃, Sb(OH)₃, Sn(OH)₄, Tl(OH)₃, Zr(OH)₄, Al(OH)₃, or a combination thereof. The flame retardant may include, for example, at least one selected from among zinc borate, a calcium molybdate zinc complex, MoO₃, (NH₄)₂Mo₂O₇, Sb₂O₃, and Sb₃O₅. The lithium immobilizer may be, for example, a compound that immobilizes lithium by reacting with liquid lithium at a temperature of about 180 °C or more which is a melting temperature of lithium. The lithium immobilizer may react with, for example, liquid lithium, to change lithium into other insoluble compounds. The lithium immobilizer may be, for example, a metal oxide that is reactive with liquid lithium. The metal oxide included in the filler may be, for example, TiO₂, ZrO₂, HfO₂, ThO₂, or a combination thereof. The metal oxide may react with, for example, liquid lithium, to generate Li₂O and a metal. A reaction equation may be, for example, 4Li+MO_{2→}M+2Li₂O. Liquid lithium may be fixed by reacting with a metal oxide to generate lithium oxide. Liquid lithium molten at a high temperature may be suppressed or reduced from leaking to the cathode layer 10. In some embodiments, the safety of the all-solid secondary battery 1 may be improved.

A content (e.g., amount) of the filler included in the flame-retardant inactive member may be, for example, in a range of about 1 part by weight to about 80 parts by weight, about 5 parts by weight to about 80 parts by weight, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight with respect to 100 parts by weight of the flame-retardant inactive member.

The flame-retardant inactive member may further include, for example, a binder. The binder may include, for example, a curable polymer or a non-curable polymer. The curable polymer may be a polymer that is cured by heat and/or pressure. The curable polymer may be, for example, a solid at room temperature. The flame-retardant inactive member may include, for example, a heat-press curable film and/or a cured product thereof. A heat-press curable polymer may be, for example, TSA-66 by Toray.

The flame-retardant inactive member may additionally include other materials in addition to the previously-described substrate, reinforcing material, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as PP or PE.

A density of the substrate or the reinforcing material included in the flame-retardant inactive member may be, for example, in a range of about 10 % to about 300 %, about 10 % to about 150 %, about 10 % to about 140 %, about 10 % to about 130 %, or about 10 % to about 120 % of a density of the cathode active material included in the cathode active material layer 12.

The inactive member 40 may be a member that does not include an electrochemically active material, for example, an electrode active material. The electrode active material may be a material that absorbs/desorbs lithium. The inactive member 40 may be a member including (e.g., consisting of) a material utilized in the art other than an electrode active material.

### [Solid electrolyte layer]

### [Solid electrolyte layer: Solid electrolyte]

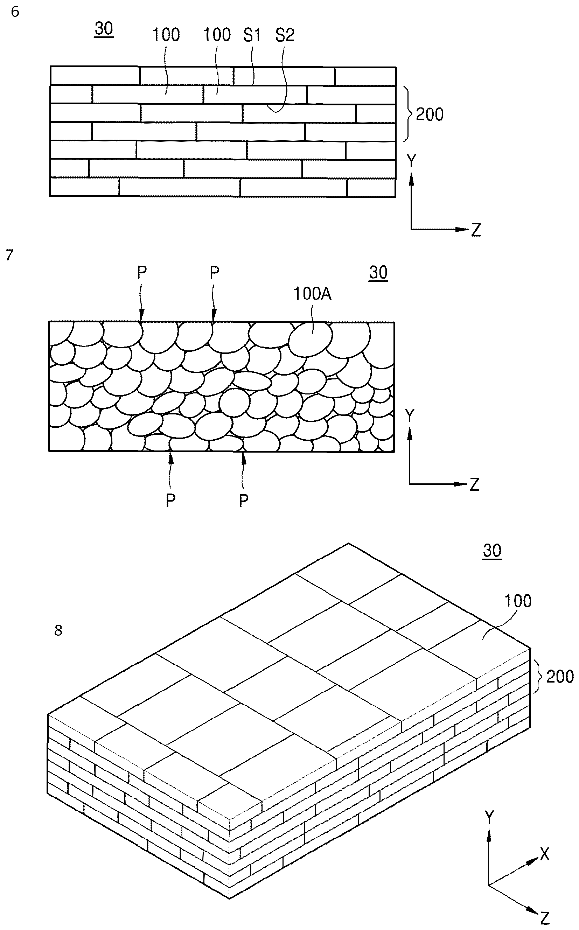

Referring to FIGS. 6 to 14, the solid electrolyte layer 30 may include a solid electrolyte disposed between the cathode layer 10 and the anode layer 20.

Referring to FIGS. 6 and 8, the solid electrolyte layer 30 may include, for example, the first 2D sulfide-based solid electrolyte 100 arranged in one direction. The first 2D sulfide-based solid electrolyte 100 may be arranged in one direction, and thus the density of the solid electrolyte layer 30 may be further improved. In some embodiments, the energy density of a lithium battery may be further improved.

For example, a direction in which the first 2D sulfide-based solid electrolyte 100 is arranged may be a direction that is distinguished from a thickness direction (Y-direction) of the solid electrolyte layer 30. An angle formed between the direction in which the first 2D sulfide-based solid electrolyte 100 is arranged and the thickness direction of the solid electrolyte layer 30 may be, for example, in a range of about 10° to about 170°, about 20° to about 160°, about 30° to about 150°, about 14° to about 135', about 60° to about 120°, or about 75° to about 105°.

For example, the first 2D sulfide-based solid electrolyte 100 may be arranged in a direction (Z-direction or X-direction) substantially perpendicular to the thickness direction of the solid electrolyte layer 30. For example, the first 2D sulfide-based solid electrolyte 100 may be arranged such that a first surface S1 and/or a second surface S2 of the first 2D sulfide-based solid electrolyte 100 are disposed in a direction parallel to a surface of the solid electrolyte layer 30.

The solid electrolyte layer 30 may include the first 2D sulfide-based solid electrolyte arranged in the direction distinguished from the thickness direction of the solid electrolyte layer 30 so that lithium dendrites may be suppressed or reduced from growing in the thickness direction of the solid electrolyte layer 30, and a short circuit and/or the like may be suppressed or reduced. In some embodiments, the deterioration of the all-solid secondary battery 1 may be suppressed or reduced, and the lifespan characteristics thereof may be improved.

A direction in which the first 2D sulfide-based solid electrolyte 100 is stacked may be, for example, a direction similar to the thickness direction of the solid electrolyte layer 30. An angle formed between the direction in which the first 2D sulfide-based solid electrolyte 100 is stacked and the thickness direction of the solid electrolyte layer 30 may be, for example, in a range of about -30° to about 30° or about -20° to about 20°. For example, the first 2D sulfide-based solid electrolyte 100 may be stacked in the thickness direction of the solid electrolyte layer 30 such that the first surface S1 and/or the second surface S2 of the first 2D sulfide-based solid electrolyte 100 are disposed in a direction parallel to the surface of the solid electrolyte layer 30.

The first 2D sulfide-based solid electrolyte 100 may be stacked, for example, in the thickness direction of the solid electrolyte layer 30. The solid electrolyte layer 30 may include a first 2D sulfide-based solid electrolyte stack 200. The solid electrolyte layer 30 may include a plurality of first 2D sulfide-based solid electrolyte stacks 200. The number of first 2D sulfide-based solid electrolytes 100 included in one first 2D sulfide-based solid electrolyte stack 200 may be about 2 or more, about 5 or more, about 10 or more, about 50 or more, about 100 or more, or about 200 or more. The number of first 2D sulfide-based solid electrolytes 100 included in one first 2D sulfide-based solid electrolyte stack 200 may be in a range of about 2 to about 1,000, about 5 to about 1,000, about 10 to about 1,000, about 50 to about 1,000, about 100 to about 1,000, or about 200 to about 1,000. The solid electrolyte layer 30 may include the first 2D sulfide-based solid electrolyte 100 stacked in the direction similar to the thickness direction of the solid electrolyte layer 30 so that lithium dendrites may be suppressed or reduced from growing in the thickness direction of the solid electrolyte layer 30, and a short circuit and/or the like may be suppressed or reduced. In some embodiments, the deterioration of the all-solid secondary battery 1 may be suppressed or reduced, and the lifespan characteristics thereof may be improved.

A content (e.g., amount) of the first 2D sulfide-based solid electrolyte 100 may be, for example, about 50 wt% or more, about 60 wt% or more, about 70 wt% or more, about 80 wt% or more, about 90 wt% or more, or about 95 wt% or more of the total weight of the solid electrolyte layer 30. The content (e.g., amount) of the first 2D sulfide-based solid electrolyte 100 may be, for example, in a range of about 50 wt% to about 100 wt%, about 60 wt% to about 100 wt%, about 70 wt% to about 100 wt%, about 80 wt% to about 100 wt%, about 90 wt% to about 99.99 wt%, or about 95 wt% to about 99 wt%. of the total weight of the solid electrolyte layer 30. The solid electrolyte layer 30 may include the first 2D sulfide-based solid electrolyte 100 having such a high content (e.g., amount), and thus a possibility that pinholes P are formed in the surface of the solid electrolyte layer 30 may be further reduced during preparation of the solid electrolyte layer 30. For example, the growth of lithium dendrites due to pinholes may be more effectively suppressed or reduced during charging or discharging of the all-solid secondary battery 1. In some embodiments, the lifespan characteristics of the all-solid secondary battery 1 may be further improved.

In contrast, referring to FIGS. 7 and 9, in the solid electrolyte layer 30 including an irregular-shaped sulfide-based solid electrolyte 100A with an aspect ratio of less than about 2, grain boundaries between particles of the irregular-shaped sulfide-based solid electrolyte 100A may be connected in the thickness direction of the solid electrolyte layer 30, and thus lithium dendrites may easily grow in the thickness direction of the solid electrolyte layer 30. For example, the pinholes P may be easily formed between the particles of the irregular-shaped sulfide-based solid electrolyte 100A in the surface of the solid electrolyte layer 30, and thus lithium dendrites may more easily grow through the pinholes. In some embodiments, a possibility of a short circuit in a lithium battery including the solid electrolyte layer 30 may increase, and the cycle characteristics thereof may deteriorate.

The first 2D sulfide-based solid electrolyte 100 may be selected from sulfide-based solid electrolytes included in the cathode active material layer 12. In other embodiments, the solid electrolyte layer 30 may include an oxide-based solid electrolyte, a polymer solid electrolyte, or a combination thereof.

The oxide-based solid electrolyte may be selected from oxide-based solid electrolytes utilized in the cathode active material layer 12.

The polymer solid electrolyte may include, for example, a dry polymer electrolyte, a gel polymer electrolyte, or a combination thereof.

The dry polymer electrolyte may be an electrolyte that includes, for example, a mixture of a lithium salt and a polymer. The dry polymer electrolyte may be, for example, a polymer electrolyte that does not include a liquid electrolyte. The polymer included in the dry polymer electrolyte may include, for example, PEO, PVDF, vinylidene fluoride-hexafluoropropylene (PVDF-HFP), a poly(styrene)-b-ethylene oxide) (PS-PEO) block or reduce copolymer, poly(styrene-butadiene), poly(styrene-isoprene-styrene), a poly(styrene-b-divinylbenzene) block or reduce copolymer, a poly(styrene-ethylene oxide-styrene) block or reduce copolymer, or a combination thereof. As the lithium salt, any material may be utilized as long as the material may be utilized as a lithium salt in the art. For example, the lithium salt may include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein x and y are each in a range of 1 to 20, LiCl, Lil, or a mixture thereof.

The gel polymer electrolyte may be an electrolyte that includes a liquid electrolyte and a polymer. The liquid electrolyte may include, for example, a mixture of a lithium salt and an organic solvent. The polymer included in the gel polymer electrolyte may be selected from polymers included in the dry polymer electrolyte. The lithium salt may be selected from lithium salts utilized in the dry polymer electrolyte.

The solid electrolyte layer 30 may be impermeable to lithium polysulfide. In some embodiments, side reactions between an anode layer and lithium polysulfide, which is generated during charging or discharging of a sulfide-based cathode active material, may be blocked. In some embodiments, the cycle characteristics of the all-solid secondary battery 1 including the solid electrolyte layer 30 may be improved.

### [Solid electrolyte layer: Binder]

The solid electrolyte layer 30 may include, for example, a binder. The binder included in the solid electrolyte layer 30 may include, for example, SBR, PTFE, PVDF, PE, and/or the like, but one or more embodiments are not limited thereto. Any material may be utilized as long as the material may be utilized as a binder in the art. The binder of the solid electrolyte layer 30 may be the same as or different from the binder included in the cathode active material layer 12 and the first anode active material layer 22. The binder may not be provided.

A content (e.g., amount) of the binder included in the solid electrolyte layer 30 may be in a range of about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt% with respect to the total weight of the solid electrolyte layer 30.

### [Anode layer]

### [Anode layer: Anode active material]

Referring to FIGS. 4 to 10, the anode layer 20 may include the first anode active material layer 22. The first anode active material layer 22 may include, for example, an anode active material and a binder.

The anode active material included in the first anode active material layer 22 may be, for example, an anode material that may form an alloy or compound together with lithium.

The anode active material included in the first anode active material layer 22 may have, for example, a particle form. An average particle diameter of the anode active material having the particle form may be, for example, about 4 µm or less, about 3 µm or less, about 2 µm or less, about 1 µm or less, about 500 nm or less, about 300 nm or less, or about 100 nm or less. The average particle diameter of the anode active material having the particle form may be, for example, in a range of about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. The anode active material may have an average particle diameter in such a range, and thus the reversible absorbing and/or desorbing of lithium may become easier during charging or discharging. The average particle diameter of the anode active material may be, for example, a median diameter (D50) measured by utilizing a laser type or kind particle size distribution meter.

The anode active material included in the first anode active material layer 22 may include, for example, at least one selected from among a carbon-based anode active material and a metal or metalloid anode active material.

The carbon-based anode active material may include, for example, amorphous carbon, crystalline carbon, porous carbon, or a combination thereof.

The carbon-based anode active material may be, for example, amorphous carbon. Examples of the amorphous carbon may include CB, AB, FB, KB, graphene, and/or the like, but one or more embodiments are not necessarily limited thereto. Any material may be utilized as long as the material may be classified as amorphous carbon in the art. The amorphous carbon may be carbon that has no crystallinity or very low crystallinity and may be distinguished from crystalline carbon or graphite-based carbon.

The carbon-based anode active material may be, for example, porous carbon. A pore volume of the porous carbon may be, for example, in a range of about 0.1 cc/g to about 10.0 cc/g, about 0.5 cc/g to about 5 cc/g, or about 0.1 cc/g to about 1 cc/g. An average pore diameter of the porous carbon may be, for example, in a range of about 1 nm to about 50 nm, about 1 nm to about 30 nm, or about 1 nm to about 10 nm. A Brunauer-Emmett-Teller (BET) specific surface area of the porous carbon may be, for example, in a range of about 100 m²/g to about 3,000 m²/g.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but one or more embodiments are not necessarily limited thereto. Any material may be utilized as long as the material may be utilized as a metal anode active material or a metalloid anode active material which forms an alloy or compound together with lithium in the art. For example, nickel (Ni) may not form an alloy together with lithium and thus may not be a metal anode active material.

The first anode active material layer 22 may include one type or kind of anode active material among such anode active materials or a mixture of a plurality of different anode active materials. For example, the first anode active material layer 22 may include only amorphous carbon or may include at least one selected from among gold (Au), platinum (Pt), palladium (Pd), silicon (Si), silver (Ag), aluminum (Al), bismuth (Bi), tin (Sn), and zinc (Zn). In other embodiments, the first anode active material layer 22 may include a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of the mixture of amorphous carbon to gold and/or the like may be, for example, a weight ratio in a range of about 99:1 to about 1:99, about 10:1 to about 1:2, about 5:1 to about 1:1, or about 4:1 to about 2:1, but one or more embodiments are not necessarily limited to such a range. The mixing ratio may be selected according to the required characteristics of the all-solid secondary battery 1. The anode active material may have such a composition, and thus the cycle characteristics of the all-solid secondary battery 1 may be further improved.

The anode active material included in the first anode active material layer 22 may include, for example, a mixture of first particles consisting of amorphous carbon and second particles consisting of a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In other embodiments, the metalloid may be a semiconductor. A content (e.g., amount) of the second particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt% with respect to the total weight of the mixture. The second particles may have a content (e.g., amount) in such a range, and thus, for example, the cycle characteristics of the all-solid secondary battery 1 may be further improved.

In other embodiments, the first anode active material layer 22 may include a composite anode active material. The composite anode active material may include, for example, a carbon-based support and a metal-based anode active material supported on the carbon-based support. The composite anode active material may have such a structure so that the localization of the metal-based anode active material in the first anode active material layer 22 may be prevented or reduced, and the substantially uniform distribution thereof may be obtained. In some embodiments, the cycle characteristics of the all-solid secondary battery 1 including the first anode active material layer 22 may be further improved.

The metal-based anode active material supported on the carbon-based support may include, for example, a metal, a metal oxide, a composite of a metal and a metal oxide, or a combination thereof. Examples of the metal may include gold (Au), platinum (Pt), palladium (Pd), silicon (Si), silver (Ag), aluminum (Al), bismuth (Bi), tin (Sn), zinc (Zn), and/or the like. Examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, zinc (Zn) oxide, and/or the like. The metal oxide may include, for example, AuₓO_{y}, wherein 0<x≤2 and 0<y≤3, PtₓO_{y}, wherein 0<x≤1 and 0<y≤2, PdₓO_{y}, wherein 0<x≤1 and 0<y≤1, SiₓO_{y}, wherein 0<x≤1 and 0<y≤2, AgₓO_{y}, wherein 0<x≤2 and 0<y≤1, AlₓO_{y}, wherein 0<x≤2 and 0<y≤3, BiₓO_{y}, wherein 0<x≤2 and 0<y≤3, SnₓO_{y}, wherein 0<x≤1 and 0<y≤2, ZnₓO_{y}, wherein 0<x≤1 and 0<y≤1, or a combination thereof. The composite of the metal and the metal oxide may include, for example, a composite of Au and AuₓO_{y}, wherein 0<x≤2 and 0<y≤3, a composite of Pt and PtₓO_{y}, wherein 0<x≤1 and 0<y≤2, a composite of Pd and PdₓO_{y}, wherein 0<x≤1 and 0<y≤1, a composite of Si and SiₓO_{y}, wherein 0<x≤1 and 0<y≤2, a composite of Ag and AgₓO_{y}, wherein 0<x≤2 and 0<y≤1, a composite of Al and AlₓO_{y}, wherein 0<x≤2 and 0<y≤3, a composite of Bi and BiₓO_{y}, wherein 0<x≤2 and 0<y≤3, a composite of Sn and SnₓO_{y}, wherein 0<x≤1 and 0<y≤2), a composite of Zn and ZnₓO_{y}, wherein 0<x≤1 and 0<y≤1, or a combination thereof.

The carbon-based support may include, for example, amorphous carbon. Examples of the amorphous carbon may include CB, AB, FB, KB, graphene, activated carbon, CNFs, CNTs, and/or the like, but one or more embodiments are not necessarily limited thereto. Any material may be utilized as long as the material may be classified as amorphous carbon in the art. The amorphous carbon may be carbon that has no crystallinity or very low crystallinity and may be distinguished from crystalline carbon or graphite-based carbon. A carbonaceous material may be, for example, a carbon-based anode active material.

The composite anode active material may have, for example, a particle form. A particle diameter of the composite anode active material having the particle form may be, for example, in a range of about 10 nm to about 4 µm, about 10 nm to about 1 µm, about 10 nm to about 500 nm, about 10 nm to about 200 nm, or about 10 nm to about 100 nm. The composite anode active material may have a particle diameter in such a range, and thus the reversible absorbing and/or desorbing of lithium may become easier during charging or discharging. The metal-based anode active material supported on the carbon-based support may have, for example, a particle form. A particle diameter of the metal-based anode active material may be, for example, in a range of about 1 nm to about 200 nm, about 1 nm to about 150 nm, about 5 nm to about 100 nm, or about 10 nm to about 50 nm. The carbon-based support may have, for example, a particle form. A particle diameter of the carbon-based support may be, for example, in a range of about 10 nm to about 2 µm, about 10 nm to about 1 µm, about 10 nm to about 500 nm, about 10 nm to about 200 nm, or about 10 nm to about 100 nm. The carbon-based support may have a particle diameter in such a range and thus may be more uniformly disposed in the first anode active material layer 22. The carbon-based support may include, for example, nanoparticles having a particle diameter of about 500 nm or less. The particle diameter of the composite anode active material, the particle diameter of the metal-based anode active material, and the particle diameter of the carbon-based support may each be, for example, an average particle diameter. The average particle diameter may be, for example, a median diameter (D50) measured by utilizing a laser type or kind particle size distribution meter. In other embodiments, the average particle diameter may be determined automatically by utilizing software, for example, from an electron microscope image or may be manually determined according to a manual.

### [Anode layer: Binder]

A binder included in the first anode active material layer 22 may be, for example, SBR, PTFE, PVDF, PE, a vinylidene fluoride/hexafluoropropylene copolymer, polyacrylonitrile, polymethyl methacrylate, and/or the like, but one or more embodiments are not necessarily limited thereto. Any material may be utilized as long as the material may be utilized as a binder in the art may be utilized. The binder may be provided as a single binder or a plurality of different binders.

The first anode active material layer 22 may include the binder and thus may be stabilized on the anode current collector 21. In some embodiments, cracks of the first anode active material layer 22 may be suppressed or reduced despite changes in a volume and/or relative position of the first anode active material layer 22 during a charging/discharging process. For example, if (e.g., when) the first anode active material layer 22 does not include a binder, the first anode active material layer 22 may be easily separated from the anode current collector 21. At a portion of the anode current collector 21 exposed due to the separation of the first anode active material layer 22 from the anode current collector 21, the anode current collector 21 may be in contact with the solid electrolyte layer 30, which may cause an increase in possibility of the occurrence of a short circuit. The first anode active material layer 22 may be formed, for example, by applying a slurry, in which a material constituting the first anode active material layer 22 is dispersed, onto the anode current collector 21 and drying the slurry. The first anode active material layer 22 may include the binder, and thus an anode active material may be stably distributed in the slurry. For example, if (e.g., when) the slurry is applied onto the anode current collector 21 through screen printing, the clogging of a screen (for example, clogging by aggregates of an anode active material) may be suppressed or reduced.

### [Cathode layer: Other additives]

The first anode active material layer 22 may further include additives utilized in the all-solid secondary battery 1 according to a related art, such as a filler, a coating agent, a dispersant, and/or a conductive adjuvant.

### [Anode layer: Solid electrolyte]

The first anode active material layer 22 may further include a solid electrolyte. The solid electrolyte may be, for example, a material selected from solid electrolytes included in the solid electrolyte layer 30. The solid electrolyte included in the first anode active material layer 22 may serve as a reaction point at which a lithium metal starts to be formed in the first anode active material layer 22, may serve as a space in which the formed lithium metal is stored, or may serve as a path through which lithium ions are transferred. The solid electrolyte may not be provided.

In the first anode active material layer 22, for example, a content (e.g., amount) of the solid electrolyte may be high in a region adjacent to the solid electrolyte layer 30 and may be low in a region adjacent to the anode current collector 21. The solid electrolyte in the first anode active material layer 22 may have, for example, a concentration gradient in which a concentration decreases from the region adjacent to the solid electrolyte layer 30 to the region adjacent to the anode current collector 21.

### [Anode layer: First anode active material layer]

An initial charge capacity B of the first anode active material layer 22 may be less than about 50 %, about 45 % or less, about 40 % or less, about 30 % or less, about 20 % or less, or about 10 % or less of an initial charge capacity A of the cathode active material layer 12. For example, a ratio B/A of the initial charge capacity B of the first anode active material layer 22 to the initial charge capacity A of the cathode active material layer 12 may be in a range of about 0.005 to about 0.45. The initial charge capacity of the cathode active material layer 12 may be determined at a maximum charging voltage vs. Li/Li⁺ from a 1^{st} open circuit voltage (OCV). The initial charge capacity of the first anode active material layer 22 may be determined at about 0.01 V vs. Li/Li⁺ from a 2^{nd} OCV.

The maximum charging voltage may be determined according to types (kinds) of cathode active materials. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage of a Li₂S or a Li₂S composite may be about 2.5 V vs. Li/Li⁺. For example, the maximum charging voltage of Li₂S or the Li₂S composite may be about 3.0 V vs. Li/Li⁺. The ratio B/A of the initial charge capacity B of the first anode active material layer 22 to the initial charge capacity A of the cathode active material layer 12 may be, for example, in a range of about 0.01 to about 0.4, about 0.01 to about 0.3, about 0.01 to about 0.2, or about 0.05 to about 0.1.

The initial charge capacity (mAh) of the cathode active material layer 12 may be obtained by multiplying a charge specific capacity (mAh/g) of the cathode active material by a mass (g) of the cathode active material in the cathode active material layer 12. If (e.g., when) one or more suitable types (kinds) of cathode active materials are utilized, a value of specific charge capacity×mass may be calculated for each cathode active material, and the sum of the values may be the initial charge capacity of the cathode active material layer 12. The initial charge capacity of the first anode active material layer 22 may be also calculated in substantially the same manner. The initial charge capacity of the first anode active material layer 22 may be obtained by multiplying a charge specific capacity (mAh/g) of the anode active material by a mass of the anode active material in the first anode active material layer 22. If (e.g., when) one or more suitable types (kinds) of anode active materials are utilized, a value of specific charge capacity×mass may be calculated for each anode active material, and the sum of the values may be the initial charge capacity of the first anode active material layer 22. The specific charge capacity of each of the cathode active material and the anode active material may be measured by utilizing a solid half-cell that uses a lithium metal as a counter electrode. The initial charge capacity of each of the cathode active material layer 12 and the first anode active material layer 22 may be directly measured at a constant current density, for example, about 0.1 mA/cm² by utilizing an all-solid half-cell. The measurement may be performed on a cathode at an operating voltage from a 1^{st} OCV up to a maximum charging voltage of, for example, about 3.0 V (vs. Li/Li⁺). The measurement may be performed on an anode at an operating voltage from a 2^{nd} OCV up to about 0.01 V for the anode, for example, a lithium metal. For example, an all-solid half-cell including the cathode active material layer 12 may be charged at a constant current of about 0.1 mA/cm² from a 1^{st} OCV up to about 3.0 V, and an all-solid half-cell including the first anode active material layer 22 may be charged at a constant current of about 0.1 mA/cm² from a 2^{nd} OCV up to about 0.01 V. A current density during constant current charging may be, for example, about 0.2 mA/cm² or about 0.5 mA/cm². The all-solid half-cell including the cathode active material layer 12 may be charged, for example, from a 1^{st} OCV up to about 2.5 V, about 2.0 V, about 3.5 V, or about 4.0 V. A maximum charging voltage of a cathode active material layer may be determined by a maximum voltage of a battery that satisfies the safety conditions according to JIS C 8712:2015 of the Japanese Standards Association.

If (e.g., when) the initial charge capacity of the first anode active material layer 22 is excessively low, the first anode active material layer 22 may become very thin, and thus, during a repeated charging/discharging process, lithium dendrites formed between the first anode active material layer 22 and the anode current collector 21 may collapse the first anode active material layer 22, which may make it difficult to improve the cycle characteristics of the all-solid secondary battery 1. If (e.g., when) the charge capacity of the first anode active material layer 22 excessively increases, the energy density of the all-solid secondary battery 1 may decrease, and the internal resistance of the all-solid secondary battery 1 due to the first anode active material layer 22 may increase, which may make it difficult to improve the cycle characteristics of the all-solid secondary battery 1.

A thickness of the first anode active material layer 22 may be, for example, about 50 % or less, about 40 % or less, about 30 % or less, about 20 % or less, about 10 % or less, or about 5 % or less of a thickness of the cathode active material layer 12. The thickness of the first anode active material layer 22 may be, for example, in a range of about 1 % to about 50 %, about 1 % to about 40 %, about 1 % to about 30 %, about 1 % to about 20 %, about 1 % to about 10 %, or about 1 % to about 5 % of the thickness of the cathode active material layer 12. The thickness of the first anode active material layer 22 may be, for example, in a range of about 1 µm to about 20 µm, about 2 µm to about 15 µm, or about 3 µm to about 10 µm. If (e.g., when) the first anode active material layer 22 is excessively thin, lithium dendrites formed between the first anode active material layer 22 and the anode current collector 21 may collapse the first anode active material layer 22, which may make it difficult to improve the cycle characteristics of the all-solid secondary battery 1. If (e.g., when) the thickness of the first anode active material layer 22 excessively increases, the energy density of the all-solid secondary battery 1 may decrease, and the internal resistance of the all-solid secondary battery 1 due to the first anode active material layer 22 may increase, which may make it difficult to improve the cycle characteristics of the all-solid secondary battery 1. If (e.g., when) the thickness of the first anode active material layer 22 decreases, for example, the initial charge capacity of the first anode active material layer 22 may also decrease.

### [Anode layer: Second anode active material layer]

In some embodiments, the all-solid secondary battery 1 may further include a second anode active material layer which, after charging, is disposed between the anode current collector 21 and the first anode active material layer 22. The second anode active material layer may be a metal layer including lithium or a lithium alloy. The metal layer may include lithium or the lithium alloy. In some embodiments, the second anode active material layer may be the metal layer including lithium and thus may serve, for example, as a lithium reservoir. Examples of the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but one or more embodiments are not limited to thereto. Any material may be utilized as long as the material may be utilized as a lithium alloy in the art. The second anode active material layer may include (e.g., consist of) one of such alloys or lithium or may include (e.g., consist of) one or more suitable types (kinds) of alloys. The second anode active material layer may be, for example, a plated layer. For example, the second anode active material layer may be plated between the first anode active material layer 22 and the anode current collector 21 during a charging process of the all-solid secondary battery 1.

A thickness of the second anode active material layer is not limited, but may be, for example, in a range of about 1 µm to about 500 µm, about 1 µm to about 200 µm, about 1 µm to about 150 µm, about 1 µm to about 100 µm, or about 1 µm to about 50 µm. If (e.g., when) the second anode active material layer is excessively thin, it is difficult for the second anode active material layer to function as a lithium reservoir. If (e.g., when) the second anode active material layer is excessively thick, the mass and volume of the all-solid secondary battery 1 may increase, and the cycle characteristics of the all-solid secondary battery 1 may actually deteriorate.

In other embodiments, in the all-solid secondary battery 1, for example, before assembly of the all-solid secondary battery 1, the second anode active material layer may be disposed between the anode current collector 21 and the first anode active material layer 22. If (e.g., when) the second anode active material layer is disposed between the anode current collector 21 and the first anode active material layer 22 before the assembly of the all-solid secondary battery 1, the second anode active material layer may be the metal layer including lithium and thus may serve as a lithium reservoir. For example, before the assembly of the all-solid secondary battery 1, lithium foil may be disposed between the anode current collector 21 and the first anode active material layer 22.

If (e.g., when) the second anode active material layer is plated by the all-solid secondary battery 1 being charged after being assembled, the all-solid secondary battery 1 may not include (e.g., may exclude) the second anode active material layer during the assembly of the all-solid secondary battery 1, and thus the energy density of the all-solid secondary battery may increase. During charging of the all-solid secondary battery 1, the first anode active material layer 22 may be charged beyond a charge capacity thereof. For example, the first anode active material layer 22 may be overcharged. At the beginning of charging, lithium may be adsorbed in the first anode active material layer 22. The anode active material included in the first anode active material layer 22 may form an alloy or compound together with lithium ions that move from the cathode layer 10. If (e.g., when) charging is performed beyond a capacity of the first anode active material layer 22, for example, lithium may be precipitated on a rear surface of the first anode active material layer 22, for example, between the anode current collector 21 and the first anode active material layer 22, and a metal layer corresponding to the second anode active material layer may be formed by the precipitated lithium. The second anode active material layer may be a metal layer mainly consisting of lithium (for example, metallic lithium). Such a result is obtained, for example, because the anode active material included in the first anode active material layer 22 includes a material that forms an alloy or compound together with lithium. During discharging, lithium in the first anode active material layer 22 and the second anode active material layer, for example, lithium in the metal layer, may be ionized to move toward the cathode layer 10. In some embodiments, in the all-solid secondary battery 1, lithium may be utilized as an anode active material. In some embodiments, the first anode active material layer 22 may cover the second anode active material layer, thereby serving as a protective layer for the second anode active material layer, for example, the metal layer, and concurrently (e.g., simultaneously) serving to suppress or reduce the precipitation growth of lithium dendrites. In some embodiments, a short circuit and a reduction in capacity of the all-solid secondary battery 1 may be suppressed or reduced, thereby improving the cycle characteristics of the all-solid secondary battery 1. In other embodiments, if (e.g., when) the second anode active material layer is disposed by the all-solid secondary battery 1 being charged after being assembled, the anode layer 20, for example, the anode current collector 21, the first anode active material layer 22, and a region therebetween, may be Li-free regions that do not include lithium (Li) in an initial state of the all-solid secondary battery 1 or in a state after full discharging thereof.

### [Anode layer: Anode current collector]

The anode current collector 21 may include (e.g., consist of) a material that does not react with lithium, for example, a material that does not form both (e.g., simultaneously) an alloy and a compound together with lithium. Examples of a material constituting the anode current collector 21 may include copper (Cu), stainless steel, titanium (Ti), iron (Fe), cobalt (Co), and nickel (Ni), but one or more embodiments are not necessarily limited thereto. Any material may be utilized as long as the material may be utilized an electrode current collector in the art. The anode current collector 21 may include (e.g., consist of) one type or kind of the previously-described metals, an alloy of two or more types (kinds) of metals, or a coating material. The anode current collector 21 may be, for example, in the form of a plate or foil.

For example, in some embodiments, the all-solid secondary battery 1 may further include a thin film including an element, which may form an alloy together with lithium, on at least one surface of the anode current collector 21. The thin film may be disposed between the anode current collector 21 and the first anode active material layer 22. The thin film may include, for example, an element capable of forming an alloy together with lithium. Examples of the element capable of forming an alloy together with lithium may include gold, silver, zinc, tin, indium, silicon, aluminum, bismuth, and/or the like, but one or more embodiments are not necessarily limited thereto. Any material may be utilized as long as the material may form an alloy together with lithium in the art. The thin film may include (e.g., consist of) one of such metals or an alloy of one or more suitable types (kinds) of metals. The thin film may be disposed on at least one surface of the anode current collector 21 so that, for example, a plated form of the second anode active material layer 24 plated between the thin film and the first anode active material layer 22 may be further planarized, and the cycle characteristics of the all-solid secondary battery 1 may be further improved.

A thickness of the thin film may be, for example, in a range of about 1 nm to about 800 nm, about 10 nm to about 700 nm, about 50 nm to about 600 nm, or about 100 nm to about 500 nm. If (e.g., when) the thickness of the thin film is less than about 1 nm, it may be difficult for the thin film to function. If (e.g., when) the film is excessively thick, the thin film itself may adsorb lithium, and thus an amount of lithium precipitated on the anode layer 20 may decrease, resulting in a decrease in energy density of the all-solid secondary battery 1 and a decrease in cycle characteristics of the all-solid secondary battery 1. The thin film may be disposed on the anode current collector 21 through, for example, vacuum deposition, sputtering, plating, and/or the like, but one or more embodiments are not necessarily limited to such a method. Any method capable of forming a thin film in the art may be utilized.

In some embodiments, the anode current collector 21 may include, for example, a base film and a metal layer disposed on at least one surface (e.g., one or two (e.g., opposite) surfaces) of the base film. The base film may include, for example, a polymer. The polymer may be, for example, a thermoplastic polymer. The polymer may include, for example, PET, polyethylene (PE), polypropylene (PP), polybutylene terephthalate (PBT), polyimide (PI), or a combination thereof. The polymer may be an insulating polymer. The base film may include an insulating thermoplastic polymer, and thus, if (e.g., when) a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. The base film, metal layer, metal chip, and lead tab of the anode current collector 21 may be defined as for the previously-described cathode current collector 11. The anode current collector 21 may have such a structure, and thus a weight of the anode layer 20 may be reduced, thereby improving the energy density of the anode layer 20 and a lithium battery.

### Mode for the Invention

The present disclosure will be described in more detail through the following Examples and Comparative Examples. However, Examples are for illustrative purposes only, and the scope of the present disclosure is not limited by Examples.

### (2D sulfide-based solid electrolyte)

### Preparation Example 1: First 2D sulfide-based solid electrolyte

As a first 2D solid electrolyte, rGO-Li₆PS₅Cl composite was prepared. The rGO-Li₆PS₅Cl composite was prepared according to a method disclosed in Materials Today Energy 23 (2022) 100913, except that a weight ratio of rGO (reduced graphene oxide) to Li₆PS₅Cl was changed to about 1:60. The rGO-Li₆PS₅Cl composite is obtained by coating an rGO core with a Li₆PS₅Cl shell which is an argyrodite-type or kind crystal. The rGO-Li₆PS₅Cl composite was in the form of a flake having a thickness of about 1 µm, a length of 3 µm, and an aspect ratio of about 3. The rGO-Li₆PS₆Cl composite had a polygonal shape in a plane view. The thickness and length of the rGO-Li₆PS₅Cl composite were each an average value calculated from multiple composite particles read from a SEM image.

### (All-solid secondary battery)

### Example 1: Mono-cell all-solid secondary battery, sulfide-based cathode active material (Li₂S-C-LiI composite), weight ratio of flake solid electrolyte: particulate solid electrolyte= about 10:40, first 2D solid electrolyte

### (Preparation of anode layer)

Stainless steel (SUS) foil having a thickness of about 10 µm was prepared as an anode current collector. For example, as an anode active material, CB particles with a primary particle diameter of about 30 nm and silver (Ag) particles with an average particle diameter of about 60 nm were prepared.

About 4 g of a mixed powder obtained by mixing the CB particles and the silver (Ag) particles at a weight ratio of about 3:1 was put into a container, and about 4 g of an N-methyl-2-pyrrolidone (NMP) solution including about 7 wt% of a PVDF binder (#9300 manufactured by Kureha Corporation) was added thereto to prepare a mixed solution. While NMP was added little by little to the prepared mixed solution, the mixed solution was stirred to prepare a slurry. The prepared slurry was applied onto a SUS sheet by utilizing a bar coater and dried in air at a temperature of about 80 °C for about 10 minutes to prepare a stack. The prepared stack was vacuum-dried at a temperature of about 40 °C for about 10 hours. The dried stack was cold-roll-pressed to planarize a surface of a first anode active material layer of the stack to prepare an anode layer. A thickness of the first anode active material layer was about 15 µm. An area of the first anode active material layer was equal to an area of the anode current collector. The initial charge capacity of the anode (i.e., the first anode active material layer) was measured utilizing the half-cell described previously.

### (Preparation of cathode layer)

A L₂S-C-LiI composite was prepared as a cathode active material. The Li₂S-C-LiI composite was prepared according to a method disclosed in Nano Lett. 2016, 16, 7, pp 4521-4527, except that Li₆PS₅Cl was changed into Lil. As a first 2D solid electrolyte, the rGO-Li₆PS₅Cl composite prepared in Preparation Example 1 was prepared. Li₆PS₅Cl (D50= about 3.0 µm, crystalline), which was an argyrodite-type or kind (e.g., argyrodite) crystal, was prepared as an irregular-shaped particulate solid electrolyte. KB was prepared as a conductive material. An aspect ratio of the irregular-shaped particulate solid electrolyte was less than about 2.

Such materials were mixed such that the cathode active material, the first 2D solid electrolyte, the irregular-shaped particulate solid electrolyte, the conductive agent had a weight ratio of about 40:10:40:10, thereby preparing a cathode mixture. The cathode mixture was obtained through dry mixing utilizing a ball mill. The cathode mixture obtained through the ball milling formed an ion-conductive and an electronic-conductive network.

The cathode mixture was disposed on at least one surface of a cathode current collector made of aluminum foil, of which one surface was coated with carbon, and was plate-pressed at a pressure of about 200 MPa for about 10 minutes to prepare a cathode layer. A thickness of the cathode layer was about 120 µm. A thickness of a cathode active material layer was about 100 µm, and a thickness of the carbon-coated aluminum foil was about 20 µm. An area of the cathode active material layer was equal to an area of the cathode current collector. The initial charge capacity of the cathode (i.e., the cathode active material layer) was measured utilizing the half-cell described above. The ratio (B/A) of the initial charge capacity (B) of the first anode active material layer and the initial charge capacity (A) of the cathode active material layer was less than 0.5. The initial charge capacity of the cathode active material layer was determined by charging from 1^{st} open circuit voltage to about 2.8 V vs. Li/Li⁺. The initial charge capacity of the first anode active material layer was determined by charging from a 2^{nd} open circuit voltage to about 0.01 V vs. Li/Li⁺. Further, in each of Examples 2 to 10, 12, the ratios (B/ A) were also less than 0.5 respectively.

### (Preparation of solid electrolyte layer)

A mixture was prepared by adding about 1.5 parts by weight of an acrylic-based binder with respect to about 98.5 parts by weight of a solid electrolyte to a Li₆PS₅Cl solid electrolyte (D50=about 3.0 µm, crystalline) which was an argyrodite-type or kind (e.g., argyrodite) crystal. Octyl acetate was added to the prepared mixture and stirred to prepare a slurry. The prepared slurry was applied onto an about 15 µm-thick non-woven fabric placed on an about 75 µm-thick PET substrate by utilizing a bar coater and dried in air at a temperature of about 80 °C for about 10 minutes to obtain a stack. The obtained stack was vacuum-dried at a temperature of about 80 °C for about 2 hours. A solid electrolyte layer was prepared through such a process.

### (Flame-retardant inactive member)

A slurry obtained by mixing a pulp fiber (cellulose fiber), a glass fiber, aluminum hydroxide (Al(OH)₃), an acrylic-based binder, and a solvent was molded into a gasket shape, and then the solvent was removed to prepare a flame-retardant inactive member.

A weight ratio of the pulp fiber (cellulose fiber), the glass fiber, the aluminum hydroxide (Al(OH)₃), and the acrylic-based binder was about 20:8:70:2. A thickness of the inactive member was about 120 µm.

Before the prepared flame-retardant inactive member was disposed on the solid electrolyte layer, vacuum heat treatment was performed at a temperature of about 80 °C for about 5 hours to remove moisture and/or the like from the flame-retardant inactive member.

### (Manufacturing of all-solid secondary battery)

Referring to FIG. 10, the solid electrolyte layer was disposed on the anode layer such that the first anode active material layer was in contact with the solid electrolyte layer. The flame-retardant inactive member was thermally pressed and disposed on the solid electrolyte layer to prepare an anode layer/solid electrolyte layer/inactive member stack.

The anode layer/solid electrolyte layer/inactive member stack was disposed on at least one surface of the cathode layer such that the inactive member was opposite to the cathode active material layer, thereby preparing an anode layer/solid electrolyte layer/cathode layer electrode assembly. The inactive member was disposed around the cathode layer to surround a side surface of the cathode layer and be in contact with the solid electrolyte layer. The inactive member was utilized as a gasket. The cathode layer was disposed at a central portion of the solid electrolyte layer, and the gasket was disposed to surround the cathode layer and extend to an end portion of the solid electrolyte layer. An area of the cathode layer was about 90 % of an area of the solid electrolyte layer, and the gasket was disposed in the remaining 10 % of the entire area of the solid electrolyte layer in which the cathode layer was not disposed.

The prepared anode layer/solid electrolyte layer/cathode layer electrode assembly was plate-pressed. Through such pressing, the solid electrolyte layer may be sintered to improve battery characteristics. A thickness of the sintered solid electrolyte layer was about 45 µm. The sintered electrode assembly was put into a pouch and sealed to prepare a sealed electrode assembly. Portions of the cathode current collector and the anode current collector were extended to the outside of the sealed electrode assembly and utilized as a cathode layer terminal and an anode layer terminal.

The electrode assembly was disposed between two pressing plates, and the two pressing plates were coupled through screws to apply a certain pressure to two surfaces of the electrode assembly, thereby manufacturing an all-solid secondary battery.

### Example 2: Mono-cell all-solid secondary battery, sulfide-based cathode active material L₂S-C-LiI composite, weight ratio of flake solid electrolyte: particulate solid electrolyte=5:45 inclusion of first 2D solid electrolyte

An all-solid secondary battery was manufactured in substantially the same manner as in Example 1, except that a weight ratio of a flake solid electrolyte to a particulate solid electrolyte was changed to about 5:45.

### Example 3: Mono-cell all-solid secondary battery, sulfide-based cathode active material L₂S-C-LiI composite, weight ratio of flake solid electrolyte: particulate solid electrolyte=20:20 inclusion of first 2D solid electrolyte

An all-solid secondary battery was manufactured in substantially the same manner as in Example 1, except that a weight ratio of a flake solid electrolyte to a particulate solid electrolyte was changed to about 20:20.

### Example 4: Mono-cell all-solid secondary battery, sulfide-based cathode active material L₂S-C-LiI composite, weight ratio of flake solid electrolyte: particulate solid electrolyte=30:20 inclusion of first 2D solid electrolyte

An all-solid secondary battery was manufactured in substantially the same manner as in Example 1, except that a weight ratio of a flake solid electrolyte to a particulate solid electrolyte was changed to about 30:20.

### Example 5: Mono-cell all-solid secondary battery, sulfide-based cathode active material L₂S-C-LiI composite, weight ratio of flake solid electrolyte: particulate solid electrolyte=40:20 inclusion of first 2D solid electrolyte

An all-solid secondary battery was manufactured in substantially the same manner as in Example 1, except that a weight ratio of a flake solid electrolyte to a particulate solid electrolyte was changed to about 40:10.

### Example 6: Mono-cell all-solid secondary battery, sulfide-based cathode active material Li₂S-C-LiI-2D solid electrolyte composite, weight ratio of flake solid electrolyte:particulate solid electrolyte=10:40, first and second 2D solid electrolytes

An all-solid secondary battery was manufactured in substantially the same manner as in Example 1, except that, instead of L₂S-C-LiI composite, Li₂S-C-LiI-2D solid electrolyte composite was utilized as a cathode active material.

The Li₂S-C-LiI-2D solid electrolyte composite was prepared through the following method.

A L₂S-C-LiI composite was prepared in substantially the same manner as in Example 1. The Li₂S-C-LiF composite and the rGO-Li₆PS₅Cl composite prepared in Preparation Example 1 were mixed at a weight ratio of about 4:1 at a low speed by utilizing a mixer to form a mixture, and then the mixture was formed into a composite at a rotation speed of about 100 rpm to about 2,000 rpm for about 0.1 to about 20 hours by utilizing the mixer again to prepare the Li₂S-C-LiI-2D solid electrolyte composite.

### Example 7: Mono-cell all-solid secondary battery, sulfide-based cathode active material Li₂S-C-LiI-2D solid electrolyte composite, weight ratio of flake solid electrolyte:particulate solid electrolyte=0:50, second 2D solid electrolyte

An all-solid secondary battery was manufactured in substantially the same manner as in Example 1, except that, instead of a Li₂S-CNF composite, the Li₂S-C-LiI-2D solid electrolyte composite utilized in Example 6 was utilized as a cathode active material, and in a cathode mixture, by changing a weight ratio of a flake solid electrolyte to a particulate solid electrolyte to about 0:50, the flake solid electrolyte was not utilized.

### Example 8: Mono-cell all-solid secondary battery, sulfide-based cathode active material L₂S-C-LiI composite, weight ratio of flake solid electrolyte:particulate solid electrolyte=10:40, two-layer cathode active material layer flake solid electrolyte disposed at top layer

A first cathode mixture prepared in substantially the same manner as in Example 1 was prepared.

A second cathode mixture was prepared in substantially the same manner as in Example 1, except that, by changing a weight ratio of a flake solid electrolyte to a particulate solid electrolyte was changed to about 0:50, the flake solid electrolyte was not utilized.

An all-solid secondary battery was manufactured in substantially the same manner as in Example 1, except that the first cathode mixture (containing the flake solid electrolyte) and the second cathode mixture (free of the flake solid electrolyte) were sequentially disposed on a cathode current collector to prepare a cathode layer.

A cathode active material layer included a first cathode active material layer derived from the first cathode mixture and a second cathode active material layer derived from the second cathode mixture, and the first cathode active material layer and the second cathode active material layer each had a thickness of about 50 µm.

The first cathode active material layer adjacent to the cathode current collector included the flake solid electrolyte, and the second cathode active material layer adjacent to a solid electrolyte layer was free of the flake solid electrolyte.

### Example 9: Mono-cell all-solid secondary battery, sulfide-based cathode active material L₂S-C-LiI composite, weight ratio of flake solid electrolyte:particulate solid electrolyte=10:40, two-layer cathode active material layer flake solid electrolyte disposed at bottom layer

An all-solid secondary battery was manufactured in substantially the same manner as in Example 8, except that positions of a first cathode active material layer and a second cathode active material layer were reversed to arrange the second cathode active material layer to be adjacent to a cathode current collector and arrange the first cathode active material layer to be adjacent to a solid electrolyte layer. The second cathode active material layer adjacent to the cathode current collector included a flake solid electrolyte, and the first cathode active material layer adjacent to the solid electrolyte layer was free of a flake solid electrolyte.

### Example 10: Mono-cell all-solid secondary battery, oxide-based cathode active material NCA, weight ratio of flake solid electrolyte: particulate solid electrolyte=10:40

### (Preparation of cathode layer)

LiNi_{0.8}Co_{0.1}sMn_{0.05}O₂ (NCM) coated with LZO was prepared as a cathode active material. The cathode active material coated with LZO was prepared according to a method disclosed in Korean Patent Publication No. 10-2016-0064942. As a first 2D solid electrolyte, the rGO-Li₆PS₅Cl composite prepared in Preparation Example 1 was prepared. Li₆PS₅Cl (D50=about 0.5 µm, crystalline), which was an argyrodite-type or kind (e.g., argyrodite) crystal, was prepared as an irregular-shaped particulate solid electrolyte. A PTFE binder was prepared as a binder. CNFs were prepared as a conductive agent. Materials including the cathode active material, the first 2D solid electrolyte, the irregular-shaped particulate solid electrolyte, the conductive agent, and the binder with a weight ratio of about 84:2:9.5:3:1.5 were mixed with a xylene solvent to prepare a slurry, and the slurry was formed into a sheet and then vacuum-dried at a temperature of about 40 °C for about 8 hours to prepare a cathode sheet. The prepared cathode sheet was disposed on a carbon layer of a cathode current collector including (e.g., consisting of) aluminum foil, of which at least one surface is coated with the carbon layer, and heated and roll-pressed at a temperature of about 85 °C to prepare a cathode layer. The total thickness of the cathode layer was about 120 µm. A thickness of a cathode active material layer was about 95 µm, and a thickness of the carbon-coated aluminum foil was about 25 µm.

### (Manufacturing of all-solid secondary battery)

An all-solid secondary battery was manufactured in substantially the same manner as in Example 1, except that the previously-described cathode layer was utilized.

### Example 11: Mono-cell all-solid secondary battery, oxide-based cathode active material NCA, a weight ratio of flake solid electrolyte:particulate solid electrolyte=10:40, first 2D solid electrolyte, solid electrolyte layer being first 2D solid electrolyte stack

### (Preparation of cathode layer)

NCM coated with LZO was prepared as a cathode active material. The cathode active material coated with LZO was prepared according to a method disclosed in Korean Patent Publication No. 10-2016-0064942. Li₆PS₅Cl (D50=about 0.5 µm, crystalline), which was an argyrodite-type or kind (e.g., argyrodite) crystal, was prepared as a solid electrolyte. A PTFE binder was prepared as a binder. CNFs were prepared as a conductive agent. Materials including the cathode active material, the first 2D solid electrolyte, the irregular-shaped particulate solid electrolyte, the conductive agent, and the binder with a weight ratio of about 84:11.5:3:1.5 were mixed with a xylene solvent to prepare a slurry, and the slurry was formed into a sheet and then vacuum-dried at a temperature of about 40 °C for about 8 hours to prepare a cathode sheet. The prepared cathode sheet was disposed on a carbon layer of a cathode current collector including (e.g., consisting of) aluminum foil, of which at least one surface is coated with a carbon layer, and heated and roll-pressed at a temperature of about 85 °C to prepare a cathode layer. The total thickness of the cathode layer was about 120 µm. A thickness of q cathode active material layer was about 95 µm, and a thickness of the carbon-coated aluminum foil was about 25 µm. The initial charge capacity of the cathode (i.e., the cathode active material layer) was measured utilizing the half-cell described above. The ratio (B/A) of the initial charge capacity (B) of the first anode active material layer and the initial charge capacity (A) of the cathode active material layer was less than 0.5. The initial charge capacity of the cathode active material layer was determined by charging from 1^{st} open circuit voltage to about 4.25 V vs. Li/Li⁺. The initial charge capacity of the first anode active material layer was determined by charging from a 2^{nd} open circuit voltage to about 0.01 V vs. Li/Li⁺.

### (Preparation of solid electrolyte layer)

A mixture was prepared by adding about 1.5 parts by weight of an acrylic binder to about 98.5 parts by weight of the rGO-Li₆PS₅Cl composite of Preparation Example 1 prepared as a first 2D solid electrolyte. Octyl acetate was added to the prepared mixture and stirred to prepare a slurry. The prepared slurry was applied onto an about 15 µm-thick non-woven fabric placed on an about 75 µm-thick PET substrate by utilizing a bar coater and dried in air at a temperature of about 80 °C for about 10 minutes to obtain a stack. The obtained stack was vacuum-dried at a temperature of about 80 °C for about 2 hours. A solid electrolyte layer was prepared through such a process.

### (Manufacturing of all-solid secondary battery)

An all-solid secondary battery was manufactured in substantially the same manner as in Example 1, except that the previously-described cathode layer and solid electrolyte were utilized.

### Comparative Example 1: Mono-cell all-solid secondary battery, sulfide-based cathode active material Li₂S-C-LiI composite, weight ratio of flake solid electrolyte:particulate solid electrolyte=0:50

An all-solid secondary battery was manufactured in substantially the same manner as in Example 1, except that, by changing a weight ratio of a flake solid electrolyte to a particulate solid electrolyte was changed to about 0:50, the flake solid electrolyte was not utilized.

### Comparative Example 2: Mono-cell all-solid secondary battery, oxide-based cathode active material NCA, weight ratio of flake solid electrolyte:particulate solid electrolyte=0:50

An all-solid secondary battery was manufactured in substantially the same manner as in Example 10, except that, by changing a weight ratio of a flake solid electrolyte to a particulate solid electrolyte was changed to about 0:50, the flake solid electrolyte was not utilized.

### Comparative Example 3: Mono-cell all-solid secondary battery, sulfide-based cathode active material Li₂S-C-LiI composite, simple mixture of rGO and Li₆PS₅Cl being utilized instead of flake solid electrolyte composite of rGO and Li₆PS₅Cl

An all-solid secondary battery was utilized in substantially the same manner as in Example 1, except that a mixture of rGO and Li₆PS₅Cl having a weight ratio of about 1:60 was utilized instead of a flake solid electrolyte (composite of rGO and Li₆PS₅Cl).

### Comparative Example 4: Mono-cell all-solid secondary battery, oxide-based cathode active material NCA, simple mixture of rGO and Li₆PS₅Cl being utilized instead of flake solid electrolyte composite of rGO and Li₆PS₅Cl

An all-solid secondary battery was utilized in substantially the same manner as Example 10, except that a mixture of rGO and Li₆PS₅Cl having weight ratio of about 1:60 was utilized instead of a flake solid electrolyte (composite of rGO and Li₆PS₅Cl).

### Reference Example 1: Sulfide-based cathode active material, non-utilize of inactive material free

An all-solid secondary battery was manufactured in substantially the same manner as in Example 1, except that a flame-retardant inactive member (for example, a gasket) was not utilized during manufacturing of the all-solid secondary battery.

### Reference Example 2: Oxide-based cathode active material, non-utilize of inactive material free

An all-solid secondary battery was manufactured in substantially the same manner as in Example 10, except that a flame-retardant inactive member (for example, a gasket) was not utilized during manufacturing of the all-solid secondary battery.

### Example 12: One bi-cell all-solid secondary battery, sulfide-based cathode active material L₂S-C-LiI composite, weight ratio of flake solid electrolyte:particulate solid electrolyte=10:40, first 2D solid electrolyte

### Manufacturing of bi-cell all-solid secondary battery

A cathode layer was prepared in substantially the same manner as in Example 1, except that a cathode active material layer was prepared to be disposed on two surfaces of a cathode current collector.

The total thickness of the cathode layer was about 220 µm. A thickness of each cathode active material layer was about 100 µm, and a thickness of carbon-coated aluminum foil was about 20 µm.

Two anode layers, two solid electrolyte layers, and two flame-retardant inactive members were prepared in substantially the same manner as in Example 1.

Referring to FIG. 3, the solid electrolyte layer was disposed on the anode layer such that a first anode active material layer was in contact with the solid electrolyte layer, and the cathode layer was disposed on the solid electrolyte layer. The cathode layer had a structure in which the cathode active material layer was disposed on each of two surfaces of the cathode current collector. A gasket was disposed around the cathode layer to surround the cathode layer and be in contact with the solid electrolyte layer. A thickness of the gasket was about 220 µm. For example, the gasket may have a structure in which two gaskets with a thickness of about 110 µm are stacked or may be provided as one gasket with a thickness of about 220 µm. The previously-described flame-retardant inactive member was utilized as the gasket.

The gasket was disposed in contact with a side surface of the cathode layer and the solid electrolyte layer. The cathode layer was disposed at a central portion of the solid electrolyte layer, and the gasket was disposed to surround the cathode layer and extend to an end portion of the solid electrolyte layer. An area of the cathode layer was about 90 % of an area of the solid electrolyte layer, and the gasket was disposed in the remaining about 10 % of the entire area of the solid electrolyte layer in which the cathode layer was not disposed. The solid electrolyte layer was disposed on the cathode layer and the gasket, and the anode layer was disposed on the solid electrolyte layer to prepare a stack.

The prepared stack was plate-pressed at a temperature of about 85 °C. Through such pressing, the solid electrolyte layer may be sintered to improve battery characteristics. A thickness of one sintered solid electrolyte layer was about 45 µm. The area of the solid electrolyte layer was equal to an area of the anode layer. The pressed stack was put into a pouch and vacuum-sealed to manufacture an all-solid secondary battery. Portions of the cathode current collector and the anode current collector were extended to the outside of the sealed battery and utilized as a cathode layer terminal and an anode layer terminal.

### Evaluation Example 1: High-temperature lifespan characteristic test

The charge/discharge characteristics of the all-solid secondary batteries manufactured in Examples 1 to 9, Example 12, Comparative Example 1, Comparative Example 3, and Reference Example 1 were evaluated through the following charge/discharge test. The charge/discharge test was performed by put the all-solid secondary battery into a thermostatic bath at a temperature of about 45 °C.

At a 1^{st}, the all-solid secondary batteries were charged at a constant current of about 0.6 mA/cm² for about 12.5 hours until a battery voltage reached about 2.5 V to about 2.8 V. Subsequently, the all-solid secondary batteries were discharged at a constant current of about 0.6 mA/cm² for about 12.5 hours until the battery voltage reached about 0.5 V.

The charge/discharge characteristics of the all-solid secondary batteries manufactured in Example 10, Example 11, Comparative Example 4, and Reference Example 2 were evaluated through the following charge/discharge test. The charge/discharge test was performed by put the all-solid secondary battery into a thermostatic bath at a temperature of about 45 °C.

At a 1^{st}, the all-solid secondary batteries were charged at a constant current of about 0.6 mA/cm² for about 12.5 hours until a battery voltage reached about 3.9 V to about 4.25 V. Subsequently, the all-solid secondary batteries were discharged at a constant current of about 0.6 mA/cm² for about 12.5 hours until the battery voltage reached about 2.5 V.

A discharge capacity of the 1^{st} cycle was taken as a standard capacity. From a 2^{nd} cycle, charging and discharging were performed up to a 150^{th} cycle under the same conditions as the 1^{st} cycle. Measurement results are shown in Table 2.

It was regarded that, as the number of cycles, required for a discharge capacity to decrease to about 95 % of the standard capacity after the 2^{nd} cycle, was increased, lifespan characteristics were improved.

In the all-solid secondary batteries of Reference Example 1 and Reference Example 2, a short circuit occurred before the 1^{st} cycle was completed, and thus it was impossible to measure lifespan characteristics.

**Table 1**

| | Number of cycles [times] |
|---|---|
| Example 1 mono-cell/Li₂S-C-LiI composite+SE weight ratio of flake:particulate=10:40/cathode gasket/solid electrolyte layer particulate SE | 500 |
| Example 2 mono-cell/Li₂S-C-LiI composite+SE weight ratio of flake:particulate=5:45/cathode gasket/solid electrolyte layer particulate SE | 410 |
| Example 3 mono-cell/Li₂S-C-LiI composite+SE weight ratio of flake:particulate=20:20/cathode gasket/solid electrolyte layer particulate SE | 300 |
| Example 4 mono-cell/Li₂S-C-LiI composite+SE weight ratio of flake:particulate=30:20/cathode gasket/solid electrolyte layer particulate SE | 200 |
| Example 5 mono-cell/Li₂S-C-LiI composite+SE weight ratio of flake:particulate=40:10/cathode gasket/solid electrolyte layer particulate SE | 100 |
| Example 6 mono-cell/Li₂S-C-LiI-flake SE composite+SE weight ratio of flake:particulate form=10:40/cathode gasket/solid electrolyte layer particulate SE | 600 |
| Example 7 mono-cell/Li₂S-C-LiI-flake SE composite+SE weight ratio of flake:particulate=0:50/cathode gasket/solid electrolyte layer particulate SE | 250 |
| Example 8 mono-cell/Li₂S-C-LiI composite+SE weight ratio of flake:particulate=10:40, two-layer structure top flake SE/cathode gasket/solid electrolyte layer particulate SE | 650 |
| Example 9 mono-cell/Li₂S-C-LiI composite+SE weight ratio of flake:particulate=10:40, two-layer structure bottom flake SE/cathode gasket/solid electrolyte layer particulate SE | 550 |
| Example 10 mono-cell/NCA+SE weight ratio of flake:particulate=10:40/cathode gasket/solid electrolyte layer particulate SE | 800 |
| Example 11 mono-cell/NCA+SE weight ratio of flake:particulate=0:50/cathode gasket/solid electrolyte layer flake SE | 700 |
| Example 12 bi-cell structure/rest being the same as in Example 1 | 600 |
| Comparative Example 1 mono-cell/ L₂S-C-LiI composite+SE weight ratio of flake:particulate=0:50/cathode gasket/solid electrolyte layer particulate SE | 210 |
| Comparative Example 2 mono-cell/NCA+SE weight ratio of flake:particulate=0:50/cathode gasket/solid electrolyte layer particulate form SE | 400 |
| Comparative Example 3 mono-cell/ L₂S-C-LiI composite+SE weight ratio of simple mixture of graphene and SE:particulate= 10:40/cathode gasket/solid electrolyte layer particulate SE | 180 |
| Comparative Example 4 mono-cell/NCA+SE weight ratio of simple mixture of graphene and SE:particulate=10:40/cathode gasket/solid electrolyte layer particulate SE | 350 |

As shown in Table 1, the lifespan characteristics of the all-solid secondary batteries including the sulfide-based cathode electrode active material of Examples 1 to 9 and Example 12 were improved as compared with the all-solid secondary batteries of Comparative Example 1 and Comparative Example 3.

It was determined that the all-solid secondary batteries of Examples 1 to 9 included the flake solid electrolyte to have an increased ion conduction path, and a change in volume of the cathode active material was more effectively accommodated during charging or discharging so that the lifespan characteristics were improved.

In the all-solid secondary batteries of Examples 1 to 5, the lifespan characteristics varied according to the weight ratio of the flake solid electrolyte to the particulate solid electrolyte.

The all-solid secondary battery including the flake solid electrolyte of Example 1 had improved lifespan characteristics as compared with the all-solid secondary battery of Comparative Example 3 including a simple mixture of graphene and a solid electrolyte. It was determined that, due to an increase in side reaction due to ununiform mixing, the simple mixture of graphene and the solid electrolyte deteriorated the performance of the all-solid secondary battery.

The all-solid secondary batteries including the oxide-based cathode active material of Example 10 and Example 11 had improved lifespan characteristics as compared with the all-solid secondary batteries of Comparative Example 2 and Comparative Example 4.

It was determined that the flake solid electrolyte was disposed in the cathode active material layer so that the all-solid secondary battery of Example 10 had an increased ion conduction path, and a change in volume of the cathode active material was more effectively accommodated during charging or discharging to improve the lifespan characteristics.

It was determined that, in the all-solid secondary battery of Example 11, the flake solid electrolyte was disposed in the solid electrolyte layer to reduce the formation of pinholes in a surface of the solid electrolyte layer so that cracks of the solid electrolyte layer and a short circuit due to the cracks were suppressed or reduced to improve the lifespan characteristics.

The all-solid secondary battery including the flake solid electrolyte of Example 10 had improved lifespan characteristics as compared with the all-solid secondary battery of Comparative Example 4 including a simple mixture of graphene and a solid electrolyte. It was determined that, due to an increase in side reaction due to ununiform mixing, the simple mixture of graphene and the solid electrolyte deteriorated the performance of the all-solid secondary battery.

It was determined that, due to a bi-cell structure in which each of components was disposed symmetrically, a change in volume during charging or discharging was effectively alleviated, and thus the all-solid secondary battery of Example 12 had improved lifespan characteristics as compared with the all-solid secondary batteries of Examples 1 to 5 having a mono-cell structure.

After the charging of the 1^{st} cycle was completed in the all-solid secondary batteries of Examples 1 to 12, a SEM image of a cross section of each of the batteries were measured to confirm that a lithium metal-plated layer corresponding to a second anode active material layer was formed between the solid electrolyte layer and the anode current collector.

As described above, the all-solid secondary battery according to embodiments may be applied to one or more suitable portable devices, vehicles, and/or the like.

While embodiments have been described in more detail with reference to the accompanying drawings, the present disclosure is not limited to the embodiments. It is obvious to those skilled in the art to which the present disclosure belongs that one or more suitable changes and modifications are conceivable within the scope of the technical idea described in the claims, and those are understood as naturally belonging to the technical scope of the present disclosure.

### List of Reference Numerals for Major Elements

1 all-solid secondary battery 10 cathode layer
11 cathode current collector 12 cathode active material layer
20 anode layer 21 anode current collector
22 first anode active material layer 30 solid electrolyte layer
40 inactive member
100 first 2D sulfide-based solid electrolyte
110 core 120 shell
130 interlayer
200 first 2D sulfide-based solid electrolyte stack

### Industrial Applicability

According to an aspect, according to an all-solid secondary battery having a novel structure, there may be provided an all-solid secondary battery of which a short circuit is suppressed or reduced and the cycle characteristics are improved.

## Claims

1. An all-solid secondary battery comprising:
a cathode layer;
an anode layer; and
a solid electrolyte layer between the cathode layer and the anode layer, wherein,
the cathode layer comprises a cathode current collector and a cathode active material layer on at least one surface of the cathode current collector,
at least one of the cathode active material layer or the solid electrolyte layer comprises a first two-dimensional sulfide-based solid electrolyte, and
the anode layer comprises an anode current collector and a first anode active material layer on at least one surface of the anode current collector, and
wherein an initial charge capacity (B) of the first anode active material layer is less than about 50 % of an initial charge capacity (A) of the cathode active material layer.

2. The all-solid secondary battery as claimed in claim 1, wherein,
the first two-dimensional sulfide-based solid electrolyte is defined by a length and a thickness,
an aspect ratio of the length to the thickness is about 3 or more,
the first two-dimensional sulfide-based solid electrolyte has a length of about 1 µm to about 50 µm and a thickness of about 10 nm to about 30 µm, and
the first two-dimensional sulfide-based solid electrolyte comprises a plate structure, a flake structure, a sheet structure, or a combination thereof.

3. The all-solid secondary battery as claimed in claim 1, wherein,
a surface of the first two-dimensional sulfide-based solid electrolyte has an irregular, circular, or polygonal shape, and
the polygonal shape comprises a triangular shape, a rectangular shape, a pentagonal shape, a hexagonal shape, a heptagonal shape, an octagonal shape, a nonagonal shape, or a decagonal shape.

4. The all-solid secondary battery as claimed in claim 1, wherein the first
two-dimensional sulfide-based solid electrolyte comprises a core and a shell on the core, and
wherein,
the core comprises a carbon-based material, a polymer, a metal-containing inorganic material, a sulfide-based solid electrolyte, an oxide-based solid electrolyte, or a combination thereof,
the shell comprises a sulfide-based solid electrolyte, an oxide-based solid electrolyte, a coating material, or a combination thereof,
at least one of the core or shell comprises a sulfide-based solid electrolyte, and
the core comprises a two-dimensional nanostructure, and
wherein the two-dimensional nanostructure comprises graphene, graphene oxide, reduced graphene oxide, carbon nanobelts, carbon nanosheets, carbon nanoplates, carbon nanoflakes, SiO₂, TiO₂, Al₂O₃, AIN, SiC, BaTiO₃, or a combination thereof.

5. The all-solid secondary battery as claimed in claim 4, wherein,
a ratio of a first thickness of the core to a second thickness of the shell is in a range of about 1:0.01 to about 1:1,000, and
a ratio of a first length of the core to a second length of the shell is in a range of about 1:1 to about 1:100.

6. The all-solid secondary battery as claimed in claim 1, wherein the
cathode active material layer comprises a first region adjacent to the cathode current collector and a second region adjacent to the solid electrolyte layer, and
wherein:
the first two-dimensional sulfide-based solid electrolyte is in the first region and is absent from the second region;
the first two-dimensional sulfide-based solid electrolyte is in the second region and is absent from the first region; or
the first two-dimensional sulfide-based solid electrolyte is in each of the first region and the second region.

7. The all-solid secondary battery as claimed in claim 1, wherein,
a content of the first two-dimensional sulfide-based solid electrolyte is in a range of about 1 wt% to about 50 wt% of a total weight of the cathode active material layer,
the cathode active material layer further comprises an irregular-shaped sulfide-based solid electrolyte that is distinguished from the first two-dimensional sulfide-based solid electrolyte, and
a weight ratio of the first two-dimensional sulfide-based solid electrolyte to the irregular-shaped sulfide-based solid electrolyte is in a range of about 1:99 to about 99:1.

8. The all-solid secondary battery as claimed in claim 1, wherein,
the cathode active material layer comprises a cathode active material, the cathode active material comprises an oxide-based cathode active material, a sulfide-based cathode active material, or a combination thereof,
the oxide-based cathode active material comprises a lithium transition metal oxide, a metal oxide, or a combination thereof, the lithium transition metal oxide comprises lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof, the metal oxides comprise iron oxide, vanadium oxide, or a combination thereof, and
the sulfide-based cathode active material comprises nickel sulfide, copper sulfide, Li₂S, a Li₂S-containing composite, or a combination thereof.

9. The all-solid secondary battery as claimed in claim 8, wherein the Li₂S-containing composite comprises a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, a composite of Li₂S and a metal carbide, a composite of Li₂S, carbon, and a metal carbide, a composite of Li₂S and a metal nitride, a composite of Li₂S, a carbon, and a metal nitride, or a combination thereof.

10. The all-solid secondary battery as claimed in claim 8, wherein the Li₂S-containing composite further comprises a second two-dimensional sulfide-based solid electrolyte, and
wherein a size of the second two-dimensional sulfide-based solid electrolyte is smaller than a size of the first two-dimensional sulfide-based solid electrolyte.

11. The all-solid secondary battery as claimed in claim 1, wherein the
cathode active material layer further comprises at least one selected from among a conductive material and a binder, and
wherein the conductive material comprises a carbon-based conductive material.

12. The all-solid secondary battery as claimed in claim 1, further comprising an inactive member on at least one side surface of the cathode layer, wherein the inactive member is along the side surface of the cathode layer to surround the cathode layer and comprises a position determination portion configured to determine a position of the inactive member on the solid electrolyte layer.

13. The all-solid secondary battery of claim 1, wherein the solid electrolyte layer comprises the first two-dimensional sulfide-based solid electrolyte arranged in one direction.

14. The all-solid secondary battery as claimed in claim 13, wherein,
the first two-dimensional sulfide-based solid electrolyte is aligned in a direction substantially normal to a thickness direction of the solid electrolyte layer and is stacked in the thickness direction of the solid electrolyte layer, and
a content of the first two-dimensional sulfide-based solid electrolyte is about 50 wt% or more of a total weight of the solid electrolyte layer.

15. The all-solid secondary battery as claimed in claim 1, wherein the first
anode active material layer comprises an anode active material and a binder, and
wherein the anode active material has a particle form and an average particle diameter of about 4 µm or less.

16. The all-solid secondary battery as claimed in claim 15, wherein the
anode active material comprises at least one selected from among a carbon-based anode active material and a metal-based anode active material, and
wherein,
the carbon-based anode active material comprises amorphous carbon, crystalline carbon, porous carbon, or a combination thereof, and
the metal-based anode active material comprises gold (Au), platinum (Pt), palladium (Pd), silicon (Si), silver (Ag), aluminum (Al), bismuth (Bi), tin (Sn), zinc (Zn), or a combination thereof.

17. The all-solid secondary battery as claimed in claim 15, wherein the
anode active material comprises a mixture of first particles and second particles,
wherein the first particles comprise amorphous carbon, and the second particles comprise a metal or metalloid, and
wherein a content of the second particles is in a range of about 8 wt% to about 60 wt% with respect to a total weight of the mixture.

18. The all-solid secondary battery as claimed in claim 15, wherein the
anode active material comprises a carbon-based support and a metal-based anode active material supported on the carbon-based support, and
wherein,
the metal-based anode active material comprises a metal, a metal oxide, a composite of a metal and a metal oxide, or a combination thereof,
the metal-based anode active material has a particle form and a particle diameter of about 1 nm to about 200 nm, and
the carbon-based support has a particle form and a particle diameter of about 10 nm to about 2 µm.

19. The all-solid secondary battery as claimed in claim 1, further comprising
a second anode active material layer between the solid electrolyte layer and the anode current collector,
wherein,
the second anode active material layer is between the first anode active material layer and the anode current collector and/or between the first anode active material layer and the solid electrolyte layer, and
the second anode active material layer is a metal layer comprising lithium metal or a lithium alloy.

20. The all-solid secondary battery as claimed in claim 1, wherein at least
one of the cathode current collector or the anode current collector comprises a base film and a metal layer on at least one surface of the base film, and
wherein,
the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.
